# EUROPÄISCHE PATENTSCHRIFT

(11) **EP 3 597 461 B1**
(45) Veröffentlichungstag und Bekanntmachung des Hinweises auf die Patenterteilung: **21.04.2021**
(21) Anmeldenummer: 18184573.6
(22) Anmeldetag: 19.07.2018
(51) Int. Cl.: B60K 1/00, B60K 1/02, B60K 11/02, B60K 17/356, B60K 1/04

(54) **ELEKTROFAHRZEUG**
ELECTRIC VEHICLE
VÉHICULE ÉLECTRIQUE

(43) Veröffentlichungstag der Anmeldung: 22.01.2020
(73) Patentinhaber: FLET GmbH, 38118 Braunschweig (DE)
(72) Erfinder: Meyer, Wolfgang, 38116 Braunschweig (DE); Grote, Jochen, 38104 Braunschweig (DE)
(74) Vertreter: Gramm, Lins & Partner Patent- und Rechtsanwälte PartGmbB

(56) Entgegenhaltungen:
- EP-A2- 1 049 235
- EP-B1- 2 732 535
- DE-A1-102005 011 848
- DE-A1-102013 204 766
- US-A1- 2007 273 225
- US-A1- 2015 155 801

## Beschreibung

Die Erfindung betrifft ein Elektrofahrzeug, insbesondere ein Elektroauto, gemäß dem Oberbegriff von Anspruch 1.

Elektrofahrzeuge werden seit geraumer Zeit hergestellt und erleben eine Renaissance. Im Vergleich zu Fahrzeugen mit Verbrennungsmotor ist ihr Anteil bisher jedoch gering. Auch wenn die Herstellung von Elektrofahrzeugen sich grundsätzlich einfacher und kostengünstiger gestaltet, als die Herstellung von Verbrennungsmotorfahrzeugen, so werden bisher für die unterschiedlichen Leistungsklassen in den Außenabmessungen unterschiedlich große Elektromotoren eingesetzt.

An ein Fahrzeug und damit auch an ein Elektrofahrzeug werden eine Vielzahl an Anforderungen gestellt, die kumulativ erfüllt sein müssen, damit es sich gegen die bereits bestehenden Fahrzeuge durchsetzen kann. So sollte ein Elektrofahrzeug langlebig, in einem weiten Temperaturbereich einsetzbar, robust und möglichst einfach aufgebaut sein. Zudem sollte das Elektrofahrzeug möglichst einfach zu fertigen sein und es idealerweise gestatten, auf einfache Weise Produktvarianten abzuleiten.

Aus der DE 10 2005 011 848 A1 ist ein elektromechanisches Hybridfahrzeuggetriebe bekannt, bei dem zwei Module miteinander verbunden werden.

Aus der US 2015/155801 A1 ist ein Elektrofahrzeug bekannt, bei dem ein Elektromotor aus zwei Motor-Modulen aufgebaut wird. Die Wellen der Motormodule werden über eine Verrippung miteinander verbunden. Die Anschlüsse für die Kühlflüssigkeit und die elektrischen Kontaktierungen werden jeweils zur Seite hinten weg geführt. Aus der US 2007/273225 A1 ist ein Motor zur Verwendung in Tiefbohrungen bekannt. Zum Schutz gegen Salzwasser ist die Wicklung vergossen. Zwei solche Module können über eine Steckverbindung aneinander montiert werden, wobei über die Steckverbindung auch der Stromanschluss realisiert wird.

Aus der EP 1 049 235 A2 ist eine Antriebseinheit bekannt, die einen Elektromotor aufweist. Die Motoreinheit besitzt einen Inverter zum Antreiben des elektrischen Motors, der über einen Kühlmittelanschluss mit dem gleichen Kühlmittel versorgt wird, wie es für den Elektromotor verwendet wird.

Die DE 10 2013 204 766 A1 beschreibt eine Fahrzeugachse, die einen Elektromotor besitzt. Der Elektromotor wird von einem Inverter mit elektrischer Energie versorgt. Der Inverter und der Elektromotor besitzen einen gemeinsamen Kühlkreislauf.

Der Erfindung liegt die Aufgabe zugrunde, ein verbessertes Elektrofahrzeug vorzuschlagen.

Die Erfindung löst das Problem durch ein Elektrofahrzeug nach Anspruch 1.

Bevorzugte Ausführungsformen der Erfindung werden in den abhängigen Ansprüchen 2-14 definiert.

Vorteilhaft an diesem Elektrofahrzeug ist, dass es besonders schnell zu montieren ist. Es ist möglich, die Elektromotor-Module mittels der Steckverbindung schnell aneinander zu montieren und zu befestigen. Auf diese Weise kann der Elektromotor schnell und effektiv aus den Elektromotor-Modulen aufgebaut werden.

Vorteilhaft ist zudem, dass der Elektromotor einfach zu reparieren ist. Ist nämlich ein Elektromotor-Modul ausgefallen, so kann es einfach entnommen und durch ein neues Elektromotor-Modul ersetzt werden.

Im Rahmen der vorliegenden Beschreibung wird unter der Steckverbindung eine Verbindung zweier Elektromotor-Module verstanden, die so ausgebildet ist, dass sie durch eine axiale Bewegung geschlossen werden kann. Eine Steckverbindung weist ein männliches Steckverbinder-Element und ein weibliches Steckverbinder-Element auf, die miteinander die Steckverbindung bilden.

Erfindungsgemäß umfasst die Steckverbindung (a) einen ersten Axial-Steckverbinder und (b) einen zweiten Axial-Steckverbinder, wobei der erste Axial-Steckverbinder auf einer ersten Seite seitlich neben der Rotorwelle angeordnet ist und der zweite Axial-Steckverbinder auf einer zweiten Seite gegenüber der ersten Seite seitlich neben der Rotorwelle angeordnet ist. Eine derartige Anordnung führt zu einer geringen Bauhöhe.

Günstig ist es, wenn der zumindest eine Kühlmedium-Anschluss im ersten Axial-Steckverbinder angeordnet ist und der zumindest eine Strom-Anschluss im zweiten Axial-Steckverbinder angeordnet ist. Auf diese Weise werden spannungsführende Teile von fluidführenden, insbesondere wasserführenden, Teilen getrennt. Das erhöht die Betriebssicherheit des Elektromotors.

Vorzugsweise sind der erste Axial-Steckverbinder und der zweite Axial-Steckverbinder durch eine Bewegung der Elektromotor-Module in einer Koppelrichtung aufeinander zu miteinander koppelbar. Besonders günstig ist es, wenn die Koppelrichtung in axialer Richtung bezüglich der Rotorwelle verläuft. In anderen Worten ist es in diesem Fall möglich, die Steckverbindung dadurch zu schließen, dass die beiden Elektromotor-Module in axialer Richtung aufeinander zu bewegt werden. Besonders günstig ist es in diesem Fall, wenn auf diese Weise auch die Rotorwellen miteinander gekoppelt werden können. Das erlaubt eine besonders einfache Montage. Vorzugsweise besitzt das erste Elektromotor-Modul einen Quer-Steckverbinder, der einen Quer-Kühlmediumanschluss, einen Quer-Datenleitungsanschluss und einen Quer-Antriebsstromanschlusss hat und dessen Koppelrichtung quer zur axialen Richtung verläuft. Über einen solchen Quer-Steckverbinder kann das Elektromotor-Modul und damit der Elektromotor als Ganzes einfach angeschlossen werden.

Günstig ist es, wenn der erste Axial-Steckverbinder einen ersten Sammel-Steckverbinder aufweist, wobei der erste Sammel-Steckverbinder zumindest zwei Anschlüsse umgibt und mit einem zweiten Sammel-Steckverbinder des zweiten Axial-Steckverbinders dichtend verbunden ist. Auf diese Weise werden, beispielsweise für den Kühlmedium-Anschluss, zwei Dichtungen bereitgestellt, nämlich einmal die Dichtung des Sammel-Steckverbinders und ein zweites Mal für den Kühlmedium-Anschluss selbst. Sollte eine der beiden Dichtungen undicht werden, so kommt es dennoch nicht zu einem Austreten von Kühlmedium.

Unter dem Kühlmedium wird vorzugsweise Kühlflüssigkeit, insbesondere Kühlwasser, verstanden.

Vorzugsweise ist der Kühlmedium-Anschluss mit einem Kühlkanal verbunden, der durch die Rotorwelle verläuft. Besonders günstig ist es in dem Fall, wenn das erste Elektromotor-Modul ein gesteuertes, insbesondere geregeltes Ventil aufweist, mittels dem ein Kühlmediumstrom an Kühlmedium veränderbar ist. Vorzugsweise besitzen alle Elektromotor-Module entsprechende Ventile. Bei diesen Ventilen kann es sich beispielsweise um Proportionalventile handeln.

Günstig ist es, wenn das erste Elektromotor-Modul eine Elektronik-Baugruppe aufweist, die ausgebildet ist zum Bestromen von Wicklungsköpfen des Elektromotor-Moduls, wobei das Elektromotor-Modul in diesem Fall gemäß einer bevorzugten Ausführungsform eine Baugruppen-Kühlleitung besitzt, die zum Kühlen der Elektronik-Baugruppe angeordnet ist. Diese Baugruppen-Kühlleitung ist mit dem Kühlmedium-Anschluss verbunden.

Besonders günstig ist es, wenn das Elektromotor-Modul ein gesteuertes, insbesondere geregeltes, Baugruppenventil zum Verändern des Kühlmittelstroms zur Elektronik-Baugruppe und/oder ein gesteuertes, insbesondere geregeltes, Statorventil zum Verändern des Kühlmediumstroms zum Stator und/oder zum Rotor aufweist. Es ist in diesem Fall möglich, den Strom an Kühlmedium zur elektronischen Baugruppe und zum Stator und/oder zum Rotor unabhängig voneinander zu steuern oder zu regeln. Das ermöglichst es, die Kühlleistung, die das Kühlmedium aufzubringen vermag, dort zu konzentrieren, wo diese Kühlleistung am dringendsten benötigt wird.

Vorzugsweise umfasst die elektronische Baugruppe zumindest ein Thermometer zum Erfassen der Temperatur der elektronischen Baugruppe, wobei das Baugruppen-Ventil vorzugsweise zum Regeln des Kühlmediumstroms anhand der von diesem Thermometer gemessenen Temperatur ausgebildet ist.

Alternativ oder zusätzlich umfassen der Stator und/oder der Rotor ein Thermometer und das Stator-Ventil ist zum Regeln des Kühlmediumstroms anhand der von diesem Thermometer gemessenen Temperatur ausgebildet.

Günstig ist es, wenn (a) das erste Elektromotor-Modul ein erstes Modul-Gehäuse hat, das eine erste Gehäuse-Koppelstruktur aufweist, (b) das zweite ElektromotorModul ein zweites Modul-Gehäuse hat, das eine zweite Gehäuse-Koppelstruktur aufweist, (c) die Elektromotor-Module mittels der Gehäuse-Koppelstrukturen formschlüssig miteinander verbunden sind, (d) eine erste Gehäuse-Koppelstruktur zumindest teilweise durch einen ersten konischen Gehäusering gebildet ist, (e) die zweite Gehäuse-Koppelstruktur zumindest teilweise durch zweiten konischen Gehäusering gebildet ist, (f) die konischen Gehäuseringe mittels einer Koppel-Schelle verbunden sind, die eine zumindest abschnittsweise konische Innenfläche hat und (g) die Koppel-Schelle zum formschlüssigen drehfesten Verbinden mit der Gehäuse-Koppelstruktur ausgebildet ist. Auf diese Weise können die Elektromotor-Module einfach miteinander verbunden werden, ohne dass es beim Anliegen von Drehmomenten an unterschiedlichen Stellen der Rotorwelle dazu kommen kann, dass sich die Elektromotor-Module gegeneinander verdrehen.

Günstig ist es, wenn (a) die Koppel-Schelle einen Schellen-Vorsprung zum Eingreifen in eine Gehäuse-Ausnehmung der Gehäuse-Koppelstruktur aufweist und/oder (b) das Gehäuse einen Gehäuse-Vorsprung zum Eingreifen in eine Schellen-Ausnehmung der Schelle aufweist und/oder (c) der Elektromotor einen Passstift aufweist, der in Gehäuse-Ausnehmung und die Schellen-Ausnehmung eingreift.

Die im Folgenden genannten Ausführungsformen beziehen sich auch auf nicht erfindungsgemäße Elektrofahrzeuge.

Günstig ist es, wenn der Elektromotor eine Elektromotor-Bauhöhe hat, und die Batterie eine Batterie-Bauhöhe hat, wobei die Elektromotor-Bauhöhe der Batterie-Bauhöhe weitgehend entspricht.

Vorteilhaft an diesem Elektrofahrzeug ist, dass der Elektromotor und die Batterie auf gleicher Höhe angeordnet werden können, was eine bevorzugte Ausführungsform darstellt und dazu führt, dass die Bauhöhe, die für den Elektromotor und die Batterie vorgesehen werden muss, klein gewählt werden kann. Besonders günstig ist es, wenn, was ebenfalls eine bevorzugte Ausführungsform darstellt, sowohl die Batterien als auch der Elektromotor unterhalb eines Niveaus angeordnet sind, auf dem sich der Fahrersitz befindet. In anderen Worten sind Motor und Batterie dann vollständig unter dem Fahrersitz angeordnet. Das führt dazu, dass der Schwerpunkt des Elektrofahrzeugs so tief liegt, dass sich eine gute Straßenlage ergibt.

Besonders vorteilhaft ist, dass diese Anpassung der Bauhöhen eine Modularisierung von Batterien und Elektromotor ermöglicht. Das wiederum gestattet es, die Herstellung von verschiedenen Modellen mit unterschiedlichen Antriebsleistungen rationell zu planen und zu fertigen.

Im Rahmen der vorliegenden Beschreibung wird unter einem Elektrofahrzeug insbesondere ein Landfahrzeug verstanden, beispielsweise ein Elektroauto oder ein Elektro-Lastkraftwagen. Vorzugsweise hat das Elektrofahrzeug vier Räder.

Unter der Achse wird das Bauteil verstanden, an dem die Räder befestigt sind. Die mathematische Achse, um die die Räder rotieren, wird als Drehachse bezeichnet.

Die Elektromotor-Bauhöhe wird insbesondere berechnet anhand desjenigen gedachten Quaders minimalen Volumens, der 90% der Masse des Elektromotors enthält. In anderen Worten ist es möglich, dass kleinere Bereiche des Elektromotors auskragen oder Vorsprünge ausbilden, wenngleich dies oft nicht vorteilhaft ist.

Die Batterie-Bauhöhe wird auf die gleiche Weise berechnet.

Unter dem Merkmal, dass die Elektromotor-Bauhöhe der Batterie-Bauhöhe weitgehend entspricht, wird insbesondere verstanden, dass sich die Elektromotor-Bauhöhe von der Batterie-Bauhöhe um höchstens 15% unterscheidet. In anderen Worten liegt ein Quotient aus Elektromotor-Bauhöhe als Zähler und Batterie-Bauhöhe als Nenner zwischen 0,85 und 1,15.

Vorzugsweise ist die die Elektromotor-Bauhöhe kleiner ist als die Batterie-Bauhöhe.

Günstig ist es, wenn dass der Batterie-Massenschwerpunkt oberhalb des Elektromotor-Massenschwerpunkts liegt. Das ermöglicht es, Teile der Batterie höher zu bauen als die Batterie-Bauhöhe ist, und so den Bauraum im Elektroauto gut auszunutzen.

Gemäß einer bevorzugten Ausführungsform liegt der Elektromotor-Massenschwerpunkt unterhalb einer Sitzebene eines Fahrersitzes und/oder unterhalb eines Bodens eines Fahrgastraums. So ergibt sich in der Regel eine gute Straßenlage.

Günstig ist es, wenn der Elektromotor die Räder einer Achse über ein Differential antreibt. Alternativ ist es aber auch möglich, dass mehr als ein Elektromotor vorhanden ist, wobei zumindest einer der Elektromotoren lediglich ein Rad antreibt. Die etwaigen Drehgeschwindigkeitsunterschiede bei der Kurvenfahrt werden in diesem Fall elektronisch ausgeregelt.

Vorzugsweise ist ein Elektrofahrzeug ein Fahrzeug, dessen Antriebsdrehmoment bei konstant 50 Kilometer pro Stunde zu zumindest 50% vom Elektromotor stammt. Besonders günstig ist es, wenn es sich um ein reines Elektrofahrzeug handelt, das heißt, dass die Räder ausschließlich elektrisch angetrieben sind.

Günstig ist es, wenn der Elektromotor vollständig zwischen den Achsen angeordnet ist. Hierunter ist insbesondere zu verstehen, dass der Elektromotor in einem Bereich angeordnet ist, der sich zwischen zwei Ebenen befindet, wobei jede der Ebenen vertikal verläuft und durch die Drehachsen der Räder des Elektrofahrzeugs bei Geradeausfahrt geht. Besonders günstig ist es, wenn der Abstand des Elektromotors zur ersten Achse möglichst wenig, vorzugsweise höchstens um den Faktor zwei, von einem Abstand von der zweiten Achse abweicht. Ein derartiges Elektrofahrzeug hat ein besonders kleines Massenträgheitsmoment bezüglich der Drehung um die Hochachse. Das Elektrofahrzeug hat daher besonders vorteilhafte Fahreigenschaften.

Günstig ist es, wenn der Abstand zwischen dem bezüglich der Längsachse des Elektrofahrzeugs vordersten Ende des Elektromotors, insbesondere des vorderen Elektromotor-Moduls, und dem hintersten Ende des Elektromotors, vorzugsweise dem hintersten Elektromotor-Modul, höchstens 15 % des Achsabstands beträgt.

Vorzugsweise besitzt das Elektrofahrzeug einen Fahrzeugboden. Der Elektromotor und die Batterie können auf dem Fahrzeugboden angeordnet sein. Alternativ sind sie am Fahrzeugboden hängend montiert. Die hängende Montage hat den Vorteil, besonders leicht durchgeführt werden zu können. Die Montage auf dem Fahrzeugboden bietet Vorteile bei dem Schutz der Batterien gegen Einwirkungen von außen.

Die im Folgenden beschriebenen Ausführungsformen beziehen sich auf nicht erfindungsgemäße Elektrofahrzeuge.

Gemäß einer alternativen Ausführungsform der Erfindung entspricht die Elektromotor-Bauhöhe nicht weitgehend der Batterie-Bauhöhe. So kann die Elektromotor-Bauhöhe kleiner sein als die Batterie-Bauhöhe. Auf diese Weise kann der Massenschwerpunkt des Elektrofahrzeugs besonders tief liegen, was die Straßenlage verbessert.

Vorzugsweise ist zwischen zwei Elektromotor-Modulen ein Wellenlager für die durchgehende Rotorwelle des Elektromotors angeordnet. Auf diese Weise werden Schwingungen des Rotors vermindert, wenn das Fahrzeug über unebenen Untergrund fährt.

Nicht erfindungsgemäß wird offenbart: ein Elektrofahrzeug mit (a) einer ersten Achse, (b) einer zweiten Achse, (c) einem Elektromotor zum Antreiben von zumindest einer der Achsen, der eine Elektromotor-Bauhöhe hat, und (d) einer Batterie zum Versorgen des Elektromotors mit elektrischer Energie, die eine Batterie-Bauhöhe hat, wobei der Elektromotor ein Außenläufer ist, wobei der Rotor einen, insbesondere T-förmigen, Außenabschnitt hat und wobei der Stator zumindest ein Spulenpaket aufweist, das zwischen dem Außenabschnitt und der Rotorwelle angeordnet ist. Die oben und im Folgenden beschriebenen bevorzugten Ausführungsformen beziehen sich auch auf diese Erfindung. Es ist möglich, nicht aber notwendig, dass der Elektromotor aus einem ersten Elektromotor-Modul und zumindest einem zweiten Elektromotor-Modul aufgebaut ist, wobei die Elektromotor-Module bezüglich einer Motor-Drehachse hintereinander angeordnet sind und eine gemeinsame Rotorwelle haben oder gekoppelte Rotorwellen besitzen. Es ist zudem möglich, nicht aber notwendig, dass das erste Elektromotor-Modul und das zweite Elektromotor-Modul mittels einer Steckverbindung miteinander verbunden sind, die zumindest einen Kühlmedium-Anschluss für Kühlmedium und zumindest einen Strom-Anschluss für Leistungsstrom hat.

Der T-förmige Außenabschnitt kann auch als Rotorglocke bezeichnet werden. Auf diese Weise ergibt sich ein hohes Drehmoment bei gleichzeitig geringer Bauhöhe. In anderen Worten ragt das zumindest eine Spulenpaket zwischen den Außenabschnitt und den verbleibenden Teil des Rotors. Es ist möglich, nicht aber notwendig, dass die Rotorglocke symmetrisch bezüglich einer Symmetrieebene, die senkrecht zur Motor-Drehachse verläuft, ist. im Folgenden beschriebenen Ausführungsformen beziehen sich auf nicht erfindungsgemäße Elektrofahrzeuge.

Gemäß einer bevorzugten Ausführungsform sind die Rotorglocke und die Rotorwelle formschlüssig miteinander verbunden. Beispielsweise hat die Rotorglocke eine Innenverzahnung und die Welle des Rotors eine Außenverzahnung, wobei die Rotorglocke mittels der Innenverzahnung und der Außenverzahnung drehfest mit der Welle verbunden ist. Das erleichtert die Montage.

Vorzugsweise umfasst der Außenabschnitt auf seiner radial einwärtigen Seite Permanentmagnete. Das zumindest eine Spulenpaket ist elektrisch, mechanisch und/oder thermisch mit einer Kappe des Stators kontaktiert. In anderen Worten ist das zumindest eine Spulenpaket so an der Kappe des Stators befestigt, dass die Abwärme des Spulenpakets aktiv oder passiv beim Betrieb des Elektrofahrzeugs abgeführt wird.

Günstig ist es, wenn der Rotor eine Hohlwelle aufweist. Auf diese Weise wird die schwingende Masse reduziert. Zudem ist es möglich, dass der Rotor von innen gekühlt wird, indem ein Kühlfluid, insbesondere Luft oder Kühlflüssigkeit, beispielsweise Wasser, durch die Hohlwelle geschickt wird.

Vorzugsweise liegt ein Batterie-Massenschwerpunkt der Batterie und/oder ein Elektromotor-Massenschwerpunkt des Elektromotors zwischen den Achsen, insbesondere in einem zentralen Drittel, vorzugsweise einem zentralen Fünftel (Quintil). Wenn das Fahrzeug so steht, dass beide Achsen sich entlang einer horizontalen Ebene erstrecken, verläuft eine erste Vertikalebene so, dass sich die erste Achse entlang der ersten Vertikalachse erstreckt. Eine zweite Vertikalachse verläuft so, dass sich die zweite Achse entlang der zweiten Vertikalachse erstreckt. Die beiden Vertikalachsen verlaufen parallel zueinander. Das zentrale Drittel ist derjenige Bereich zwischen zwei weiteren Vertikalachsen, deren Abstand von einem Drittel des Abstands von erster und zweiter Vertikalachse entspricht, deren Abstand von einem Mittelpunkt, der genau zwischen der ersten und der zweiten Vertikalachse liegt, gleich ist. Der entsprechende Massenschwerpunkt ist dann zwischen diesen beiden zusätzlichen Vertikalachsen angeordnet. Eine derartige Anordnung der Batterie bzw. des Elektromotors führt zu besonders günstigen Fahreigenschaften, da das Massenträgheitsmoment bezüglich einer Gier-, Nick- oder Rollbewegung des Elektrofahrzeugs besonders klein ist.

Vorzugsweise hat der Fahrgastraum einen mitteltunnelfreien Boden. Da die Batterie und der Elektromotor gleiche Bauhöhen haben, ist ein Mitteltunnel zum Aufnehmen eines vergrößerten Elektromotors entbehrlich. Es liegt die Erkenntnis zugrunde, dass es vorteilhaft ist, das Drehmoment des Elektromotors dadurch zu erhöhen, dass er lang ausgebildet wird. Bisherige Fahrzeuge setzen auf Elektromotoren mit möglichst großem Rotor-Durchmesser und geringer Baulänge, um das Drehmoment zu erhöhen. Das aber führt zu einer nachteiligen Lage des Elektromotor-Massenschwerpunkts und/oder macht einen Mitteltunnel notwendig.

Unter dem Merkmal, dass der Fahrgastraum einen mitteltunnelfreien Boden hat, wird insbesondere verstanden, dass der Boden im technischen Sinne eben ist. In anderen Worten sind Erhebungen zwar möglich, die maximale Erhebung ist aber klein. Insbesondere beträgt die maximale Erhebung zwischen Fahrer- und Beifahrersitz höchstens 10 Zentimeter über einer gedachten Ausgleichsebene durch den Boden des Fahrgastraumes.

Vorzugsweise besitzt das Elektrofahrzeug eine Längsachse und die Motor-Drehachse erstreckt sich entlang der Längsachse. Hierunter ist insbesondere zu verstehen, dass es zwar möglich, nicht aber notwendig ist, dass sich die Motor-Drehachse parallel zur Längsachse erstreckt. Insbesondere ist ein Versatzwinkel zwischen der Motor-Drehachse und der Längsachse möglich, der vorzugsweise höchstens 20°, insbesondere höchstens 5°, beträgt.

Vorzugsweise umfasst die Batterie zumindest zwei Batterie-Einheiten, wobei die Motor-Drehachse zwischen den Batterie-Einheiten verläuft. Unter dem Merkmal, dass die Motor-Drehachse zwischen den Batterie-Einheiten verläuft, wird verstanden, dass eine Projektion der Motor-Drehachse auf eine Ebene, entlang der sich die erste Achse und die zweite Achse erstrecken, zwischen einem ersten Batterieeinheit-Massenschwerpunkt der ersten Batterie-Einheit und einem zweiten Batterieeinheit-Massenschwerpunkt der zweiten Batterie-Einheit verläuft. Besonders günstig ist es, wenn die Drehachse so verläuft, dass - bezogen auf eine jeweilige Projektion auf die Ebene, entlang der die beiden Achsen verlaufen - die erste Batterie-Einheit von der zweiten Batterie-Einheit getrennt ist. In anderen Worten verläuft kein galvanisches Element einer Batterie-Einheit von einer Seite der Projektion der Drehachse auf die andere. Es ist allerdings möglich, dass elektrische Verbinder, insbesondere Kabel, von einer Seite der Projektion der Drehachse auf die andere Seite verlaufen.

Vorzugsweise besitzt der Elektromotor einen Rotor mit Permanentmagneten. Es ist dabei möglich, dass der Elektromotor ein Innenläufermotor ist. Alternativ ist der Elektromotor ein Außenläufermotor.

Das Elektrofahrzeug besitzt vorzugsweise ein Differential und ein Getriebe, das im Drehmomentfluss zwischen dem Motor und dem Differential angeordnet ist. Es ist möglich, nicht aber notwendig, dass das Elektrofahrzeug ein zweites Differential und eines zweites Getriebe aufweist, das im Drehmomentfluss zwischen dem Motor und dem zweiten Differential angeordnet ist. Das erste Differential treibt vorzugsweise die Räder der Vorderachse an. Das zweite Differential treibt vorzugsweise die Räder der Hinterachse an. Mit zwei Differentialen kann ein Vierradantrieb realisiert werden. Das erste Differential und/oder das zweite Differential sind jeweils drehstarr mit dem entsprechenden Rotor des Elektromotors gekoppelt.

Der Elektromotor kann besonders einfach gefertigt werden, wenn er einen Rotor mit Permanentmagneten aufweist, wobei der Rotor in Längsrichtung verlaufende Nuten aufweist, in denen die Permanentmagneten angeordnet sind. Beispielsweise sind die Permanentmagneten in die Nuten eingeschoben.

Um besonders hohe Drehmomente zu erzielen und/oder einfach einen Vierradantrieb zu realisieren ist es günstig, wenn das Elektrofahrzeug einen zweiten Elektromotor, der aus zumindest zwei Zweitelektromotor-Modulen aufgebaut ist, umfasst, wobei die Zweitelektromotor-Module einen gemeinsamen zweiten Rotor aufweisen und wobei der erste Rotor und der zweite Rotor parallel zueinander verlaufen. Es ist dabei möglich, dass der erste Elektromotor die Räder der ersten Achse antreibt und der zweite Elektromotor die Räder der zweiten Achse antreibt. Alternativ ist es auch möglich, dass der erste Elektromotor und der zweite Elektromotor gemeinsam die Räder einer der Achsen, beispielsweise der Vorderachse und/oder der Hinterachse, antreiben.

Gemäß einer bevorzugten Ausführungsform umfasst der Elektromotor einen zweiten Elektromotor, der vorzugsweise aus zumindest zwei Elektromotor-Modulen aufgebaut ist, einen dritten Elektromotor, der vorzugsweise aus zumindest zwei Elektromotor-Modulen aufgebaut ist, und einen vierten Elektromotor, der vorzugsweise aus zumindest zwei Elektromotor-Modulen aufgebaut ist, wobei jeder der Elektromotoren jeweils ein Rad, insbesondere über ein Winkelgetriebe, antreibt. Es ist günstig, wenn alle Elektromotor-Module baugleich sind. Es ist dann günstig, wenn alle Motoren von einer Motorsteuerung so angesteuert sind, dass sie ein gleiches Drehmoment auf das jeweilige Rad aufbringen, wobei vorzugsweise ein Durchdrehen unterdrückt wird. Eine solche Anti-Schlupf-Regelung gehört zum Stand der Technik und wird daher nicht weiter erläutert.

Vorzugsweise weist der Stator einen Basiskörper und ein zweites Spulenpaket auf, wobei das Spulenpaket an einer Kappe des Stators befestigt ist und wobei die Kappe reversibel am Basiskörper befestigt ist. So ist der Elektromotor leicht zu montieren. Gemäß einer bevorzugten Ausführungsform hat (a) das erste Elektromotor-Modul einen ersten Rotor, der eine erste Rotorwelle besitzt, und dessen Rotorwelle hat eine erste Wellen-Koppelstruktur, (b) das zweite Elektromotor-Modul einen zweiten Rotor, der eine zweite Rotorwelle besitzt, und dessen zweite Rotorwelle hat eine zweite Wellen-Koppelstruktur, wobei das Elektroauto (c) eine Drehlagerung, mittels der die erste Rotorwelle gelagert ist, umfasst und wobei (d) die erste Rotorwelle und die zweite Rotorwelle mittels der Koppelstrukturen formschlüssig miteinander gekoppelt sind.

Vorzugsweise sind die Koppelstrukturen zumindest teilweise von der Drehlagerung umgeben.

Vorteilhaft ist, dass der Elektromotor auf diese Weise sehr kompakt gebaut werden kann. So ist es gemäß einer bevorzugten Ausführungsform möglich, dass die Verbindung mittels der Koppelstrukturen am Gehäuse und an den Rotorwellen zu keiner zusätzlichen axialen Verlängerung der Baulänge führen.

Vorteilhaft ist zudem, dass eine derartige Koppelstruktur in der Regel vergleichsweise einfach zu fertigen ist. Es ist daher möglich, den Elektromotor aus zwei, drei, vier oder mehr Elektromotor-Modulen aufzubauen. Wie bei jeder modularen Bauweise führt die Modularisierung der einzelnen Komponenten in aller Regel zu einer effizienteren Fertigung.

Gemäß einer bevorzugten Ausführungsform besitzt die Drehlagerung ein erstes Drehlager, das einen ersten Satz an Wälzkörpern, die ringförmig angeordnet sind, aufweist, und ein zweites Drehlager, das einen zweiten Satz an Wälzkörpern, die ringförmig und versetzt zum ersten Satz angeordnet sind. Die Wellen-Koppelstrukturen sind in diesem Fall vorzugsweise zumindest teilweise, besonders bevorzugt vollständig vom ersten Drehlager und vom zweiten Drehlager umgeben. Bei dem ersten Drehlager und/oder dem zweiten Drehlager handelt es sich beispielsweise um ein Wälzlager, insbesondere ein Kugellager.

Vorteilhaft an dieser Ausführungsform ist, dass die Koppelstrukturen jedes einzelnen Elektromotor-Moduls an beiden Seiten von zumindest einem Wälzlager gelagert sind. Zum Zusammenfügen von zwei Elektromotor-Modulen müssen lediglich die beiden Koppelstrukturen der jeweiligen Elektromotor-Module formschlüssig miteinander verbunden werden.

Günstig ist es, wenn in dieser Anordnung die jeweils zu äußerst liegenden Drehlager der Elektromotor-Module aneinander angrenzen. Auf diese Weise wird ein besonders kompakter Elektromotor erhalten. Aufgrund der Modularisierbarkeit des Elektromotors eignet er sich gut für die Verwendung in Fahrzeugen, insbesondere in Personenkraftwagen. Allerdings ist dieser Elektromotor auch in anderen Fahrzeugen und auch in anderen Bereichen anwendbar.

Vorzugsweise besitzt die erste Wellen-Koppelstruktur einen sich in axialer Richtung erstreckenden Vorsprung. Die zweite Wellen-Koppelstruktur hat vorzugsweise einen sich ebenfalls in axialer Richtung erstreckenden Rücksprung, sodass die erste Wellen-Koppelstruktur und die zweite Koppelstruktur in axialer Richtung aneinander entlang einer Kontaktfläche anliegen. Günstig ist es, wenn die Kontaktflächen mit einer Winkelmessebene, die eine Drehachse des Rotors enthält, einen Winkel von höchstens 5° bildet. Auf diese Weise werden axiale Kräfte vermindert, die beim Anlegen eines Drehmoments an die Verbindung der Elektromotor-Module anderweitig entstehen würden.

Es ist möglich, dass der Vorsprung und der Rücksprung asymmetrisch ausgebildet sind. In diesem Fall erstreckt sich eine erste Kontaktfläche, entlang der der Vorsprung und der Rücksprung aneinander anliegen, in einem anderen Winkel relativ zu der Winkelmessebene als die zweite Kontaktfläche. Insbesondere ist es möglich, dass einer der Winkel Null ist. In diesem Fall entsteht keinerlei axiale Kraft, wenn sich die Rotoren in eine erste Richtung drehen. Hingegen entsteht eine größere Kraft, wenn die Rotoren in die entgegengesetzte Richtung drehen.

Vorzugsweise weist der Elektromotor zumindest eine Zusatzkomponente auf, die eine Zusatzkomponenten-Koppelstruktur mit einem sich in axialer Richtung erstreckenden Vorsprung hat, wobei die Zusatzkomponente mit einer der Koppelstrukturen eines Elektromotor-Moduls formschlüssig verbunden ist. Dadurch dass die Zusatzkomponente die gleiche Koppelstruktur hat wie die Elektromotor-Module, kann sie je nach Anforderung beliebig zwischen zwei Elektromotor-Modulen platziert werden. Bei der Zusatzkomponente handelt es sich beispielsweise um einen Drehgeber.

In diesem Fall weist der Elektromotor entsprechend einen Drehgeber auf, der eine Drehgeber-Koppelstruktur mit einem sich in axialer Richtung erstreckenden Vorsprung hat, wobei der Drehgeber mit einer der Koppelstrukturen eines Elektromotor-Moduls formschlüssig verbunden ist. Dadurch dass der Drehgeber die gleiche Koppelstruktur hat wie die Elektromotor-Module, kann er je nach Anforderung beliebig zwischen zwei Elektromotor-Modulen platziert werden.

Es sei darauf hingewiesen, dass die Rotorwellen vorzugsweise aller Elektromotor-Module miteinander formschlüssig koppelbare Koppelstrukturen aufweisen. Alternativ oder zusätzlich handelt es sich bei der Zusatzkomponente um eine Bremse. Gemäß dieser Ausführungsform besitzt der Elektromotor eine Bremse, die eine Bremsen-Koppelstruktur mit einem in axialer Richtung sich erstreckenden Vorsprung hat, wobei die Bremse mit einer Koppelstruktur eines Elektromotor-Moduls oder des Drehgebers formschlüssig verbunden ist.

Wiederum alternativ oder zusätzlich handelt es sich bei der Zusatzkomponente um eine Kupplung.

Im Folgenden wird die Erfindung anhand der beigefügten Zeichnungen näher erläutert. Alle Zeichnungen zeigen die Erfindung anhand einer Elektromotor-Bauart von verschiedenen möglichen Elektromotor-Bauarten, nämlich als permanenterregte Synchronmotoren. Es könnten jedoch auch andere Elektromotor-Bauarten verwendet werden, beispielsweise Asynchronmotoren oder bürstenlose Gleichstrommotoren. In den Zeichnungen zeigt
Figur 1a eine dreidimensionale Teil-Ansicht auf ein erfindungsgemäßes Elektrofahrzeug gemäß einer ersten Ausführungsform,
Figur 1b das Elektrofahrzeug gemäß Figur 1a in einer Schnittansicht von hinten,
Figur 1c einen Querschnitt durch ein Elektrofahrzeug gemäß einer modifizierten Ausführungsform,
Figur 1d ein Elektrofahrzeug gemäß einer zweiten Ausführungsform,
Figur 1e ein erfindungsgemäßes Elektrofahrzeug gemäß einer dritten Ausführungsform,
Figur 1f ein erfindungsgemäßes Elektrofahrzeug gemäß einer vierten Ausführungsform,
Figur 1g ein erfindungsgemäßes Elektrofahrzeug gemäß einer fünften Ausführungsform,
Figur 2 in den Teilfiguren 2a und 2b isometrische Ansichten und in Teilfigur 2c eine Schnittdarstellung eines Elektromotors als Innenläufer für ein erfindungsgemäßes Elektrofahrzeug und
Figur 3 in den Teilfiguren 3a und 3b isometrische Ansichten und in den Teilfiguren 3c und 3d Schnittdarstellungen eines Elektromotors als Außenläufer für ein erfindungsgemäßes Elektrofahrzeug,
Figur 4a eine maßstabsgerechte perspektivische Ansicht eines Elektromotor-Moduls, das als Innenläufer ausgebildet ist und Teil eines erfindungsgemäßen Elektromotors sein kann,
Figur 4b den Rotor des Elektromotor-Moduls der Innenläufer-Version gemäß Figur 4a in einer perspektivischen Ansicht,
Figur 5a einen Querschnitt durch einen Elektromotor in Form eines Innenläufers aus zwei Elektromotor-Modulen gemäß der Figuren 4a und 4b,
Figur 5b eine Detailansicht der Elektromotor-Module gemäß Figur 3a,
Figur 6 in der Teilfigur 6a eine perspektivische, maßstabsgerechte Ansicht eines erfindungsgemäßen Elektromotors, der drei Elektromotor-Module umfasst, und in Teilfigur 6b eine teilweise Explosionsansicht des Elektromotors gemäß Teilfigur 4a,
Figur 7 einen Querschnitt durch ein Elektromotor-Modul, das einen Elektromotor in Form eines Innenläufers darstellt,
Figur 8 einen Querschnitt durch ein Elektromotor-Modul eines Elektromotors oder einen Elektromotor, das/ der einen Außenläufer-Elektromotor darstellt,
Figur 9 in der Teilfigur 9a den Rotor des Elektromotor-Moduls gemäß Figur 8 in einer isometrischen perspektivischen Ansicht und in Teilfigur 9b eine Rotorwelle und einen Steg des Rotors gemäß Teilfigur 9a,
Figur 10 einen Querschnitt durch einen Elektromotor mit zwei Elektromotor-Modulen, die als Außenläufer-Elektromotoren ausgebildet sind,
Figur 11 in der Teilfigur 11a einen Kühlstutzen für einen Elektromotor in einer isometrischen perspektivischen Glaskörperansicht und Figur 11b einen Querschnitt durch die Statorkappe 50 des Kühlstutzens gemäß Teilfigur 9a und
Figur 12 eine weitere Ausführungsform eines Elektromotor-Moduls.
Figur 13 zeigt zwei Elektromotor-Module, die im Betrieb mit einer Steckverbindung verbunden sind, im getrennten Zustand,
Figur 14 drei miteinander mittels Steckverbindungen verbundene Elektromotor-Module,
Figur 15 in der Teilfigur 15a eine Frontansicht des Elektromotor-Moduls, in der Teilfigur 15b eine Hinteransicht des Elektromotor-Moduls und in der Teilfigur 15c eine Schnittansicht des Elektromotor-Moduls nach Figur 13,
Figur 16 den Kühlkreislauf des Elektromotor-Moduls gemäß einer ersten Ausführungsform und
Figur 17 den Kühlkreislauf des Elektromotor-Moduls gemäß einer zweiten Ausführungsform.

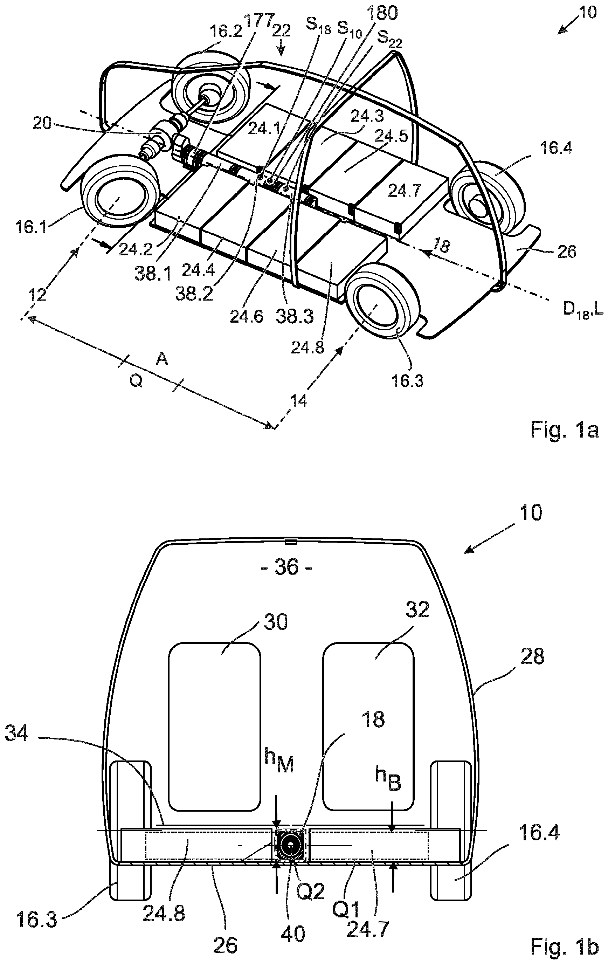

Figur 1a zeigt ein erfindungsgemäßes Elektrofahrzeug 10 in Form eines Elektroautos, das eine erste Achse 12 in Form einer Vorderachse und eine zweite Achse 14 in Form einer Hinterachse aufweist. An der ersten Achse 12 sind Räder 16.1, 16.2 befestigt, an der zweiten Achse 14 sind Räder 16.3, 16.4 befestigt. Ein Elektromotor 18 treibt über ein Differentialgetriebe 20, das auch Differential genannt werden kann, die Räder 16.1, 16.2 der ersten Achse 12 an.

Der Elektromotor 18 wird von einer Batterie 22 mit Strom versorgt. Die Batterie 22 umfasst zumindest zwei, im vorliegenden Fall acht, Batterie-Einheiten 24.1, 24.2, ..., 24.8.

Es ist zu erkennen, dass eine Motor-Drehachse D₁₈ zwischen den Batterie-Einheiten 24.1, 24.3, 24.5, 24.7 einerseits und 24.2, 24.4, 24.6 und 24.8 andererseits verläuft. Eine Masse mᵣ der rechtsseitig der Motor-Drehachse D₁₈ angeordneten Batterie-Einheiten 24.1, 24.3, 24.5 und 24.7 entspricht einer Masse mₗ der Batterie-Elemente links der Motor-Drehachse D₁₈, also im vorliegenden Fall der Batterie-Elemente 24.2, 24.4, 24.6 und 24.8.

Unter dem Merkmal, dass die beiden Massen mᵣ, mₗ einander entsprechen, wird insbesondere verstanden, dass die beiden Massen um höchstens 20%, vorzugsweise höchstens 15%, voneinander abweichen.

Das Elektrofahrzeug 10 besitzt einen Fahrzeugboden 26. In der vorliegenden Ausführungsform sind sowohl die Batterie 22 als auch der Elektromotor 18 auf dem Fahrzeugboden 26 montiert. Das Elektrofahrzeug 10 umfasst zudem nicht eingezeichnete Komponenten, wie beispielsweise eine Außenhülle, insbesondere aus Blech, sowie Sitze und eine Lenkung. Der Elektromotor 18 ist vorzugsweise wie weiter unten beschrieben aufgebaut.

Figur 1b zeigt das Elektrofahrzeug 10 in einer Ansicht von hinten. Es ist zu erkennen, dass eine Elektromotor-Bauhöhe h_{M} einer Batterie-Bauhöhe h_{B} entspricht. Die Elektromotor-Bauhöhe h_{M} ist die Höhe desjenigen gedachten Quaders Q₁ minimalen Volumens, der 90% der Masse der Batterie 22 umschließt. Figur 1b zeigt zudem eine Karosserie 28 des Elektrofahrzeugs 10. Eingezeichnet ist zudem ein Fahrersitz 30 und ein Beifahrersitz 32, die beide auf einem Boden 34 eines Fahrgastraums 36 angeordnet sind. Der Boden 34 ist im vorliegenden Fall eben, das ist aber nicht notwendig.

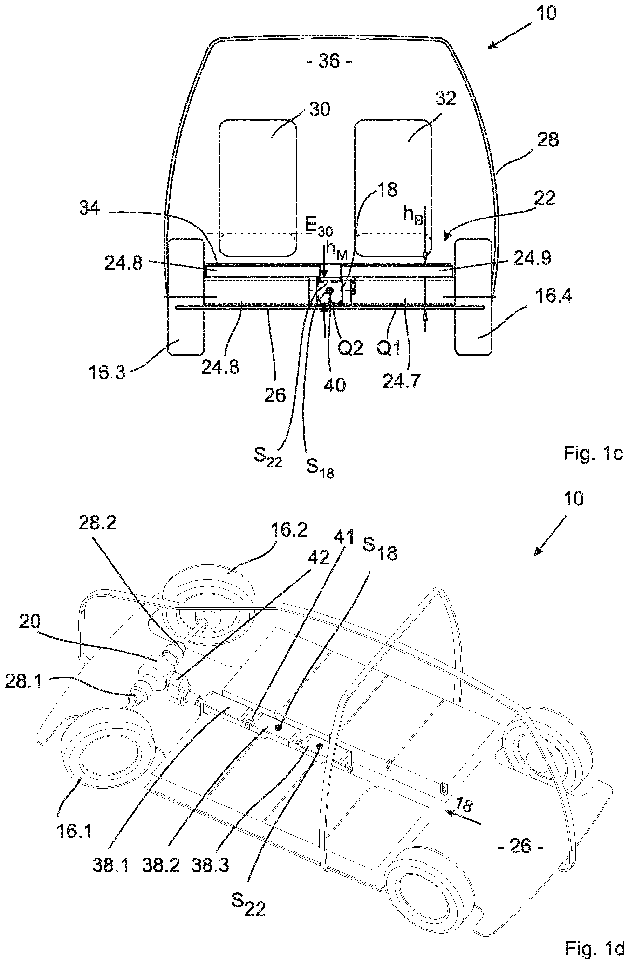

Figur 1c zeigt eine modifizierte Ausführungsform des Elektrofahrzeugs 10, bei der der Batterie-Massenschwerpunkt S₂₂ oberhalb des Elektromotor-Massenschwerpunkts S₁₈ liegt. In der Ausführungsform gemäß Figur 1c sind Teile der Batterie 22, im vorliegenden Fall nämlich die Batterie-Module 24.8 und 24.9, zumindest teilweise oberhalb des Elektromotors 18 angeordnet. Es kann sich bei den zusätzlichen Modulen beispielsweise um Austausch-Batteriemodule handeln, die entnommen werden können, ohne dass die Funktionsfähigkeit des Elektrofahrzeugs 10 beeinträchtigt wird. Insbesondere kann es sich bei den Batterie-Modulen 24.8, 24.9 um solche Batterien handeln, die als Zusatzzubehör des Elektrofahrzeugs 10 vorgehalten werden, um die Reichweite des Elektrofahrzeugs 10 zu erhöhen.

Der Sitz 30 besitzt eine Sitzebene E₃₀, entlang der sich eine Sitzfläche des Sitzes 30 erstreckt. Die meisten Fahrersitze 30 sind höhenverstellbar. In diesem Fall bezieht sich die Sitzebene E₃₀ auf diejenige Ebene, die zwischen den Ebenen liegt, die den extremen Einstellungen des Fahrersitzes 30 entsprechen. In anderen Worten ist die Sitzebene 30 in diesem Fall die Ebene, entlang der sich die Sitzfläche des Fahrersitzes 30 in der mittleren Einstellung erstreckt. Dadurch, dass der Schwerpunkt des Elektromotors unterhalb der Sitzebene ist, ergibt sich eine besonders günstige Straßenlage.

Figur 1d zeigt eine zweite Ausführungsform eines erfindungsgemäßen Elektrofahrzeugs 10, bei der der Elektromotor 18 aus drei hintereinander gekoppelten Elektromotor-Modulen 38.1, 38.2, 38.3 aufgebaut ist. Alle drei Elektromotor-Module 38.1, 38.2, 38.3 sind baugleich und weisen miteinander gekoppelte Rotorwellen 41 auf. Es ist möglich, nicht aber notwendig, dass wie in der vorliegenden Ausführungsform jedes Elektromotor-Modul 38.i (i = 1, ... N; N: Anzahl der Elektromotor-Module) ein eigenes Rotorelement aufweist, wobei die einzelnen Rotorelemente miteinander verbunden sind und somit den Rotor 39 bilden. Es ist auch möglich, dass der Rotor fügestellenfrei ausgebildet ist. Die Elektromotor-Module 38.i sind baugleich.

Figur 1d zeigt, dass das Elektrofahrzeug 10 ein zusätzliches Getriebe 42 zwischen dem Differentialgetriebe 20 und dem Elektromotor 18 aufweist. Auf diese Weise ist eine einfache Anpassung für die Rotordrehzahl an die Raddrehzahl möglich. Insbesondere kann der Elektromotor mit höheren Drehzahlen betrieben werden als ohne das Getriebe 42, bei dem es sich entsprechend vorzugsweise um ein Untersetzungsgetriebe handelt.

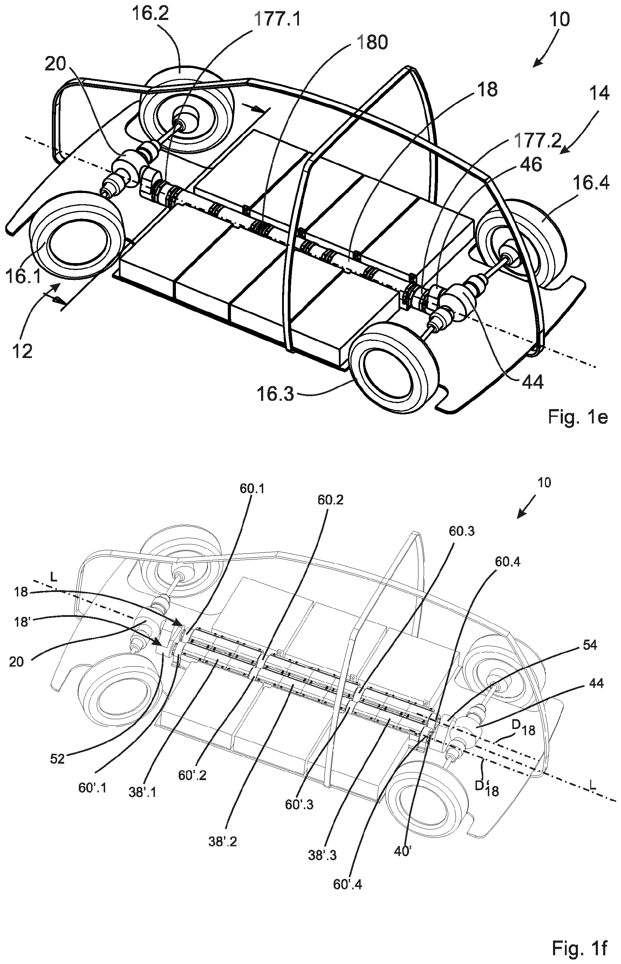

Figur 1e zeigt eine weitere Ausführungsform eines erfindungsgemäßen Elektrofahrzeugs 10, bei dem die gekoppelten Rotorwellen 41 (vgl. Figur 1d) des Elektromotors 18 sowohl mit dem Differential 20 als auch mit einem zweiten Differential 44 drehstarr verbunden sind. Im vorliegenden Fall ist das Ende der gekoppelten Rotorwelle 41 über ein zweites Getriebe 46 mit dem zweiten Differential 44 verbunden.

Anders als in der Ausführungsform gemäß der Figur 1a besitzt der Elektromotor 18 fünf Elektro-Module 38.i (N = 5). Ein maximales Drehmoment Mₘₐₓ des Elektromotors gemäß Figur 1a beträgt Mₘₐₓ = 300 Nm. Hingegen beträgt das maximale Drehmoment Mmax für das Elektrofahrzeug gemäß Figur 1e Mmax = 500 Nm. Es ist zu erkennen, dass das maximale Drehmoment mit der Anzahl der Elektromotor-Module N linear ansteigt.

Figur 1f zeigt eine vierte Ausführungsform eines erfindungsgemäßen Elektrofahrzeugs 10, das einen zweiten Elektromotor 18' aufweist. Der zweite Elektromotor umfasst drei Elektromotor-Module 38'.1, 38'.2 und 38'.3. Die beiden Elektromotor-Module 38'.1, und 38'.3 sind baugleich. Die durchgehende Rotorwelle 40' verläuft im technischen Sinne parallel zur durchgehenden Rotorwelle 40, das heißt, dass kleine Abweichungen von beispielsweise höchstens 5° tolerierbar sind. Beide durchgehenden Rotorwellen 40 und 40' und damit die zugeordneten Motor-Drehachsen D₁₈, D'₁₈ verlaufen zudem - wie bei den übrigen Ausführungsformen - entlang einer Längsachse L des Elektrofahrzeugs 10.

Die beiden Elektromotoren 18, 18' treiben gemeinsam ein erstes Koppelgetriebe 52 und ein zweites Koppelgetriebe 54 an. Das erste Koppelgetriebe 52 ist drehstarr mit dem ersten Differential 20 gekoppelt, das zweite Koppelgetriebe 54 ist mit dem zweiten Differential 44 drehstarr verbunden.

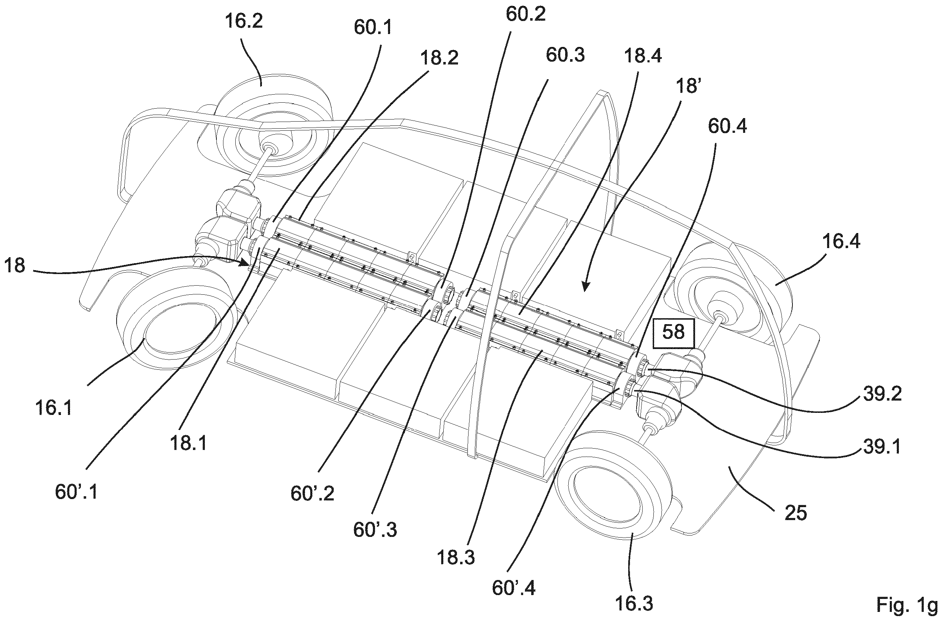

Figur 1g zeigt eine fünfte Ausführungsform eines erfindungsgemäßen Elektrofahrzeugs 10, bei dem 4 Elektromotoren 18.1,18.2,18.3 und 18.4 verwendet werden. Dabei treibt der erste Elektromotor 18.1 das erste Rad 16.1 und der zweite Elektromotor 18.2 das zweite Rad 16.2 an. Der dritte Elektromotor 18.3 treibt das dritte Rad 16.3 und der vierte Elektromotor 18.4 treibt das vierte Rad 16.4 an. Das Elektrofahrzeug 10 besitzt zudem eine schematisch eingezeichnete Motorsteuerung 58, die mit allen Elektromotoren und der Batterie verbunden ist. Die Motorsteuerung 58 ist ausgebildet zum Ansteuern aller Elektromotoren 18.1, ..., 18.4, sodass bei Kurvenfahrt des Elektrofahrzeugs 10 die unterschiedlichen Winkelgeschwindigkeiten der Räder zu angepassten Drehzahlen der jeweiligen Elektromotoren führen, sodass der Schlupf bei allen Rädern 16.i gleich groß ist und im Idealfall null beträgt. Es ist möglich, dass jeder Elektromotor aus zwei oder mehr baugleichen Elektromotor-Modulen aufgebaut ist.

Bei allen gezeigten Elektrofahrzeugen liegt ein Batteriemassenschwerpunkt S₂₂ (vgl. Fig. 1a) zwischen den Achsen 12, 14. Bei den gezeigten Ausführungsformen beträgt ein Abstand des Batterie-Massenschwerpunkts S₂₂ von einem Fahrzeug-Massenschwerpunkt S₁₀ höchstens ein Viertel eines Achsabstands A der beiden Achsen 12, 14. Ebenso liegt ein Elektromotor-Massenschwerpunkt S₁₈ dicht beim Fahrzeug-Massenschwerpunkt S₁₆, insbesondere in einem zentralen Quintil Q entlang der Längsachse L zwischen den Achsen 12, 14.

Figur 1b zeigt, dass sich die Batterie 22, insbesondere deren galvanische Zellen, nicht unterhalb des Elektromotors 18 befinden. In anderen Worten sind alle Batterie-Module 24.i bezüglich der Längsachse L entweder rechts oder links des Elektromotors 18 angeordnet, nicht aber oberhalb oder unterhalb desselben.

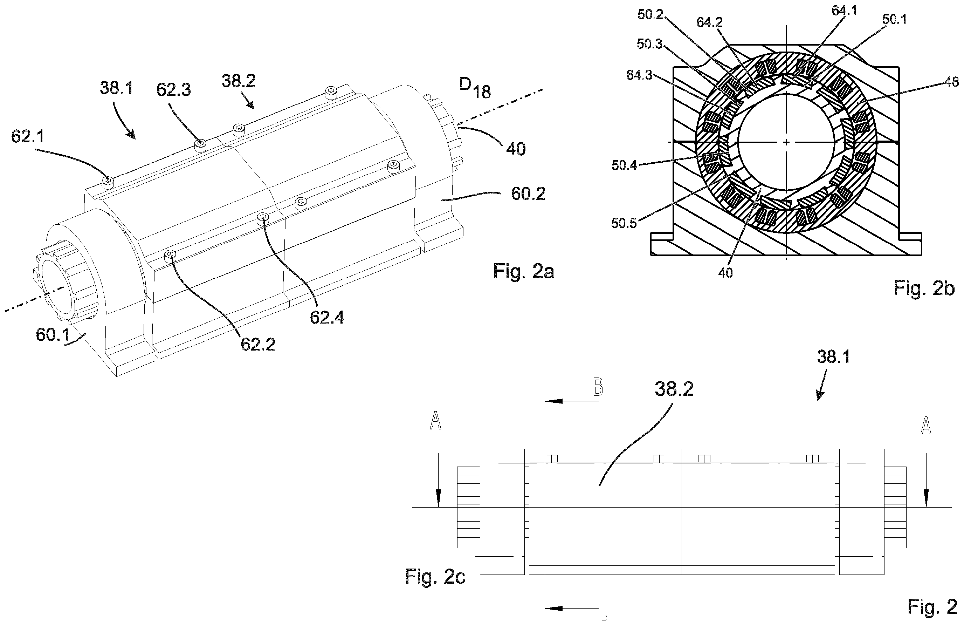

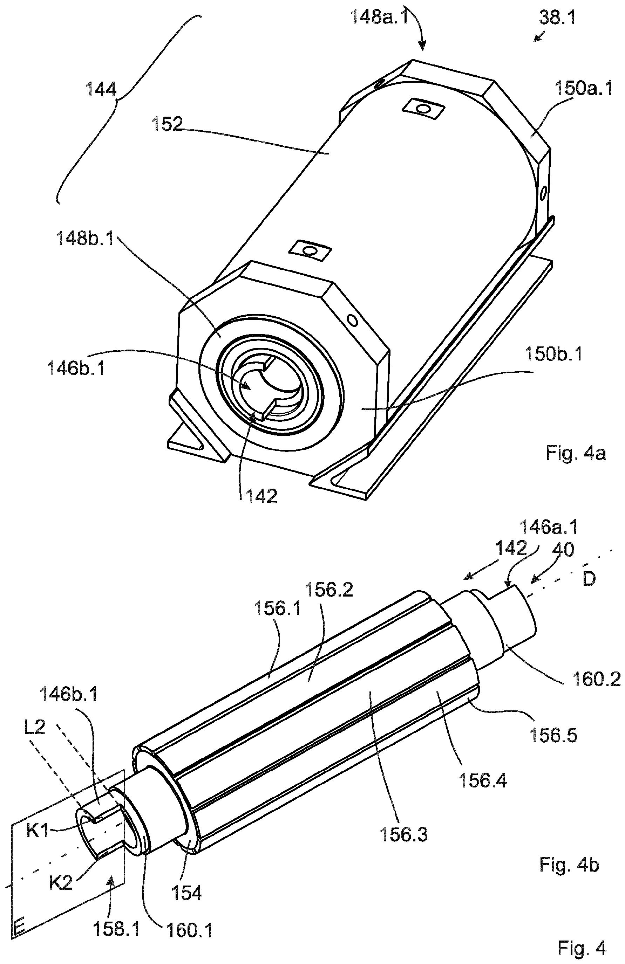

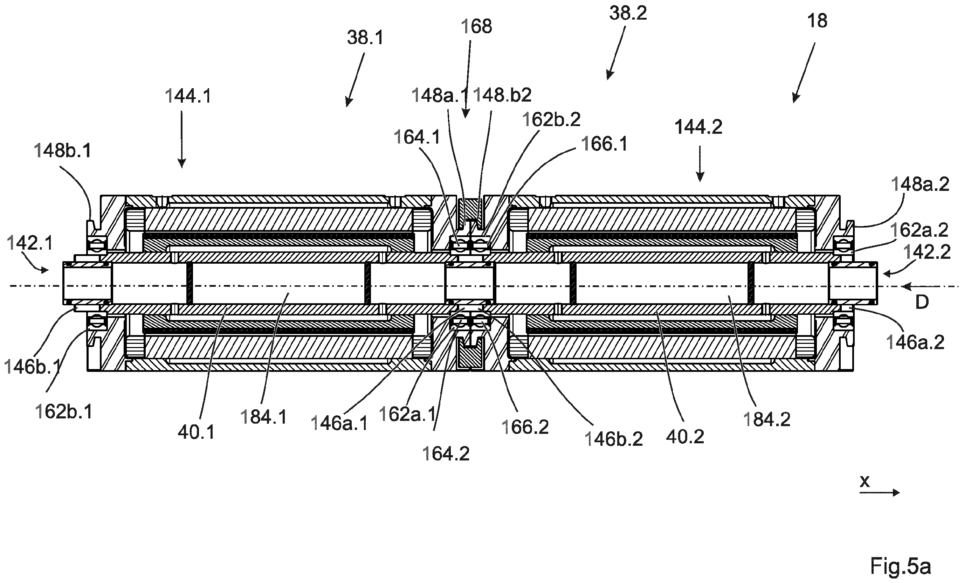

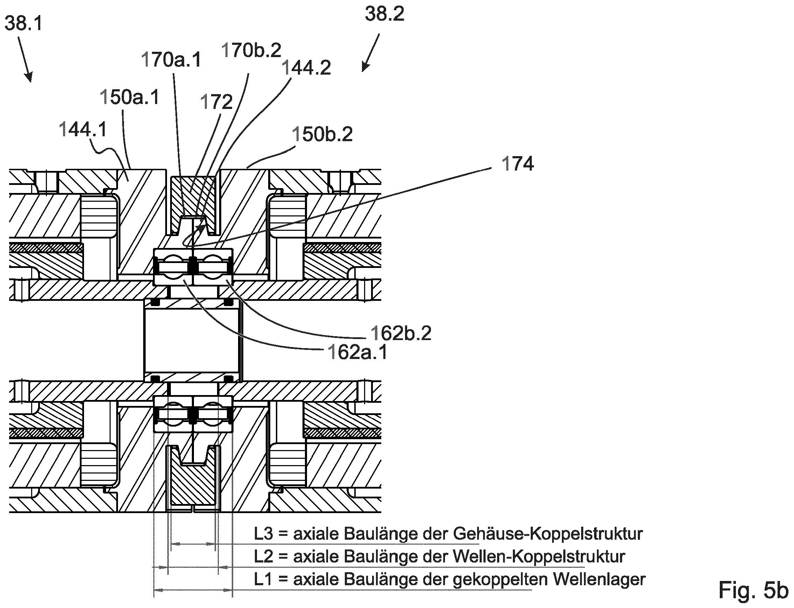

Figur 2a zeigt zwei hintereinander liegende Elektromotor-Module 38.1 und 38.2 in der Version eines Innenläufers und Wellenlager 60.1, 60.2, mit denen die durchgehende Rotorwelle 40 gelagert und am Fahrzeugboden 26 (vgl. Fig. 4, 5) befestigt ist. Es ist zu erkennen, dass die Elektromotor-Module 38.1, 38.2 mittels lösbarer Befestigungselemente, im vorliegenden Fall in Form von Schrauben 62.1, ... entfernt werden können.

Figur 2b zeigt in einem Vertikalschnitt durch ein Elektromotor-Modul der Innenläufer-version, dass in die Nuten 50.1, 50.2 ....der durchgehenden Rotorwelle 40 Permanentmagnete 64.1 ... eingeschoben sind, die vom Spulenpaket 48 zur Rotation angeregt werden.

Figur 2c zeigt eine Seitenansicht der Elektromotor-Module 38.1 und 38.2 der Innenläuferversion.

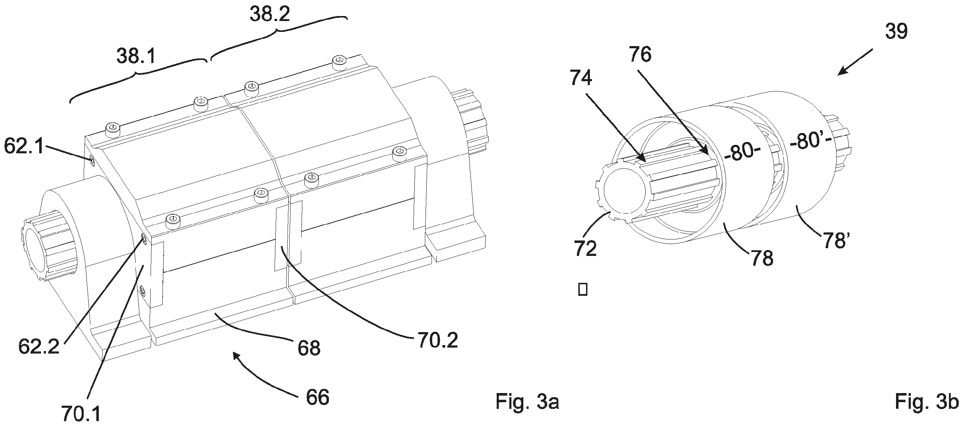

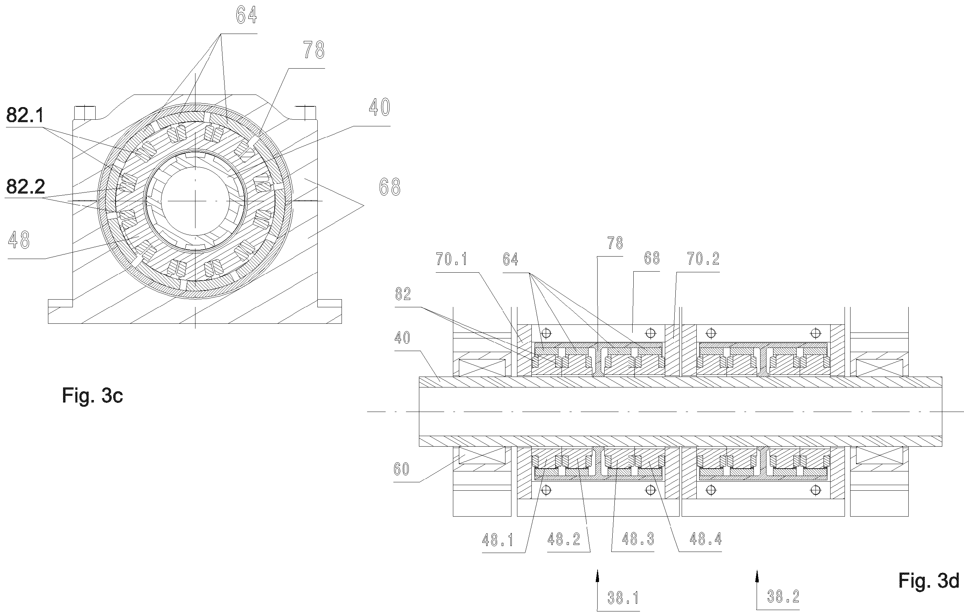

Figur 3 zeigt zwei hintereinander liegende Elektromotor-Module 38.1 und 38.2 der Außenläuferversion, deren Stator 66 einen Basiskörper 68 sowie eine erste Kappe 70.1 und eine zweite Kappe 70.2 aufweist. Die Kappen 70.1, 70.2 sind mit Schrauben 62.1, 62.2, ..., 62.8 am Basiskörper 68 reversibel befestigt. Jede Kappe 70.i ist mit mindestens einem Stator-Spulenpaket fest verbunden.

Figur 3b zeigt wie die übrigen Teilfiguren der Figur 3 eine maßstabgemäße Ansicht des Rotors 39, der eine Welle 72 in Form einer Hohlwelle umfasst. Die Welle 72 besitzt eine Außenverzahnung 74, auf der mit einer Innenverzahnung 76 eine Rotorglocke 78 sitzt. Die Rotorglocke 78 bildet einen T-förmigen Außenabschnitt des Rotors 39. Es ist zu erkennen, dass der Rotor 39 zudem eine zweite Rotorglocke 78' aufweist. Selbstverständlich können weitere Rotorglocken vorhanden sein. Beispielsweise umfasst der Elektromotor zumindest drei Rotorglocken. In Fig. 3b sind die Permanentmagnete des Rotors der Übersichtlichkeit halber nicht dargestellt.

Figur 3c zeigt einen Schnitt durch das Elektromotor-Modul 38.1 der Außenläuferversion. Es ist zu erkennen, dass die Permanentmagnete 64 auf einer Innenseite eines Mantelabschnitts 80 der Rotorglocke 78 angeordnet sind. Diese werden von dem Stator-Spulenpaket 48 bewegt. Beispielweise sind die Permanentmagnete 64.i in Nuten in der radial einwärtigen Seite des Mantelabschnitts 80 eingeschoben.

Figur 3d zeigt eine Schnittansicht durch die Elektromotor-Module 38.1 und 38.2 der Außenläuferversion mit den T-förmigen Rotorglocken 78 und 78'. Es ist zu erkennen, dass Spulen 82.i starr mechanisch und zudem thermisch mit der Kappe 70 des Stators 66 verbunden sind. In anderen Worten ist zumindest ein Spulenpaket 48, das die Spulen 82.i umfasst, so an der Kappe 70 des Stators 66 befestigt, dass Abwärme des Spulenpakets 48 aktiv oder passiv beim Betrieb des Elektrofahrzeugs abgeführt wird.

In der in Figur 1a gezeigten Ausführungsform ist der Elektromotor 18 aus drei hintereinander gekoppelten Elektromotor-Modulen 38.1, 38.2, 38.3 aufgebaut. Alle drei Elektromotor-Module 38.1, 38.2, 38.3 sind baugleich und weisen miteinander gekoppelte Rotorwellen 40.1, 40.2, 40.3 auf. Die Elektromotor-Module 38.i (i = 1, ... N; N: Anzahl der Elektromotor-Module) sind baugleich.

Figur 1e zeigt, dass das Elektrofahrzeug 10 eine erste Schaltkupplung 177.1 und eine zweite Schaltkupplung 177.2 aufweist. Die erste Schaltkupplung liegt in einem Drehmomentpfad zwischen dem Elektromotor 18 und den Rädern 16.1, 16.2 der ersten Achse 12. Die zweite Schaltkupplung 177.2 liegt in einem Drehmomentpfad zwischen dem Elektromotor 18 und den Rädern 16.3 und 16.4 der zweiten Achse 14. Die Schaltkupplungen 177.1, 177.2 sind vorzugsweise elektrisch schaltbar. Es ist auf diese Weise möglich, dass das Elektrofahrzeug 10 entweder einen reinen Vorderradantrieb oder einen reinen Hinterradantrieb oder Allradantrieb hat.

Die Figur 1f zeigt eine reduzierte perspektivische maßstabsgerechte Ansicht eines erfindungsgemäßen Elektrofahrzeugs gemäß einer weiteren Ausführungsform, die zwei Elektromotoren 18.1, 18.2 aufweist.

Die Figur 1g zeigt eine reduzierte perspektivische maßstabsgerechte Ansicht eines erfindungsgemäßen Elektrofahrzeugs gemäß einer weiteren Ausführungsform, die vier Elektromotoren 18.1,..., 18.4 aufweist.

Die Elektromotoren 18.1, 18.2 bestehen aus zumindest zwei Modulen, deren jeweilige Drehachsen parallel zueinander verlaufen. Es handelt sich aber um eine Parallelität im technischen Sinne, das heißt, dass es zwar möglich, nicht aber notwendig ist, dass die beiden Achsen im mathematischen Sinne parallel zueinander verlaufen. Insbesondere können die Drehachsen einen Winkel miteinander einschließen, der beispielsweise kleiner als 3 ° ist.

Figur 4a zeigt ein *Elektromotor-Modul* 38.1 der Innenläufer-Version, das einen ersten Rotor 142 (vgl. Figur 2b) und ein Modul-Gehäuse 144 aufweist. An der Rotorwelle 40 des Rotors 142 ist eine erste Koppelstruktur 146a ausgebildet. Das Modul-Gehäuse 144 umfasst Gehäuseringe 148a.1, 148b.1, die auch als Kopplungsringe bezeichnet werden können. Im vorliegenden Fall ist der Gehäusering 148a.1 an einer Statorkappe 150a.1 ausgebildet. Das Modul-Gehäuse144 umfasst zudem eine zweite Statorkappe 150b.1 und einen Statorträger 152, der mit beiden Statorkappen 150a.1, 150b.1 verbunden und in der gezeigten Ausführungsform der Innenläufer-Version zwischen beiden angeordnet ist. Das Suffix ".1" deutet an, dass das entsprechende Objekt zum Elektromotor-Modul 38.1 gehört.

Es ist zu erkennen, dass die Wellen-Koppelstruktur 146 teilweise axial über das Modul-Gehäuse 144 übersteht und teilweise hinter das Modul-Gehäuse 144 zurückspringt.

Figur 4b zeigt den Rotor 142 mit der Wellen-Koppelstruktur 146a.1 und einer zweiten Wellen-Koppelstruktur 146b.1, die der ersten Koppelstruktur 146a gegenüberliegend angeordnet ist. Der Rotor 142 besitzt einen Magnetträger 154, mittels dem Permanentmagneten 156.1, 156.2 angeordnet sind. Die Permanentmagneten 156.j (j = 1, 2, ...) sind so angeordnet, dass Nordpol und Südpol jeweils alternierend nach außen weisen.

Figur 4b zeigt zudem, dass die erste Koppelstruktur 146b.1 einen sich in axialer Richtung erstreckenden Vorsprung 158.1 hat. Im montierten Zustand liegt dieser Vorsprung 158.1 entlang zweier Kontaktflächen K1, K2 an einer komplementären Koppelstruktur des benachbarten Elektromotor-Moduls an. Die Kontaktflächen K1, K2 bilden mit einer Winkelmessebene E im vorliegenden Fall einen Winkel zwischen 0° und 1°. Die Winkelmessebene E ist eine Ebene, die eine Drehachse D des Rotors 142 enthält und die die jeweilige Kontaktfläche K an zumindest einer Stelle berührt oder schneidet.

Der Rotor 142 besitzt zudem eine erste Lagersitzfläche 160.1 und eine zweite Lagersitzfläche 160.2.

Figur 5a zeigt einen Querschnitt durch eine Ausführungsform eines Elektromotors 18 als Innenläuferversion, der aus Elektromotor-Modulen 38.1; 38.2 aufgebaut ist, die jeweils baugleich sind.

Das erste Elektromotor-Modul 38.1 besitzt ein erstes Drehlager 162a.1 in Form eines Kugellagers und ein zweites Drehlager 162b.1. Das zweite Elektromotor-Modul 38.2 besitzt ein Drehlager 162a.2 und ein zweites Drehlager 162b.2. Das erste Drehlager162a.1 besitzt einen ersten Satz an Wälzkörpern 164.1, 164.2, ..., die ringförmig angeordnet sind. Das zweite Drehlager 162b.2 besitzt ebenfalls Wälzkörper 166.1, 166.2, ..., die entlang eines zweiten Rings angeordnet sind, der versetzt zum ersten Ring liegt. Die beiden Drehlager 162a.1 und 162b.2 bilden ein Drehlager 168. Es ist zu erkennen, dass die Koppelstruktur 146a des ersten Elektromotor-Moduls 38.1 mit einer Koppelstruktur 146b.2 des zweiten Elektromotor-Moduls 38.2 einen Formschluss bildet und dass die Koppelstrukturen 146a.1, 146b.2 von der Drehlagerung 168 umgeben sind.

Figur 5a zeigt, dass sich die Koppelstruktur 146a.1 des ersten Elektromotor-Moduls 38.1 bis unter das Drehlager 162b.2 des zweiten Elektromotor-Moduls 38.2 erstreckt. Dies stellt - unabhängig von anderen Merkmalen der hier beschriebenen Ausführungsform - eine allgemein bevorzugte Ausführungsform dar. Zudem erstreckt sich die Koppelstruktur 146b.2 bis unter das Drehlager 162a.1.

Wenn in der vorliegenden Beschreibung von einer axialen Länge gesprochen wird, so bezieht sich dies auf eine Position entlang einer schematisch eingezeichneten x-Achse, die sich in Richtung der Drehachse D erstreckt. Insbesondere sind damit die Koppelstrukturen 146a.1 und 146b.2 auf gleicher axialer Höhe angeordnet wie die Drehlagerung 168.

Figur 5b zeigt einen Ausschnitt aus Figur 5a. Es ist zu erkennen, dass das Modul-Gehäuse 144.1 eine erste Gehäuse-Koppelstruktur 170a.1, die einen ersten konischen Gehäusering bildet, besitzt. Das zweite Modul-Gehäuse 144.2 besitzt eine zweite Gehäuse-Koppelstruktur 170b.2, die ebenfalls einen zweiten konischen Gehäusering bildet. Die beiden Gehäuse-Koppelstrukturen 170a.1, 170b.2 sind mittels eines Verbinders in Form einer Koppel-Schelle 172 formschlüssig verbunden. Die Koppel-Schelle 172 besitzt eine konische Innenfläche 174, die mit den Gehäuse-Koppelstrukturen 170a.1, 170b.2 jeweilige Flächenberührungen hat und so einen Formschluss bewirkt.

Figur 5b zeigt zudem, dass eine axiale Baulänge L1 weniger als das Doppelte, hier weniger als das 1,5-fache einer axialen Baulänge L2 eines Kopplungsabschnitts beträgt. Die axiale Baulänge L2 entspricht der axialen Länge der Wellen-Koppelung. Eine axiale Baulänge L3 der Koppel-Schelle 172 ist um einen kleinen Betrag kleiner als die axiale Baulänge L2.

Die Koppel-Schelle 172 ist so gestaltet, dass sie von außen gelöst und angezogen werden kann. Es ist dadurch möglich, zwei Elektromotor-Module 38.1, 38.2 dadurch zu verbinden, dass zunächst die Rotorwellen mittels ihrer jeweiligen Wellen-Koppelstrukturen miteinander verbunden werden. Danach werden die Gehäuse mittels des Verbinders, hier also der Koppel-Schelle 172, miteinander verbunden. Zum Lösen der Verbindung zwischen den beiden Elektromotor-Modulen 38.1, 38.2 muss lediglich die Koppel-Schelle 172 entfernt werden, dann können die Rotorwellen axial auseinander gezogen werden.

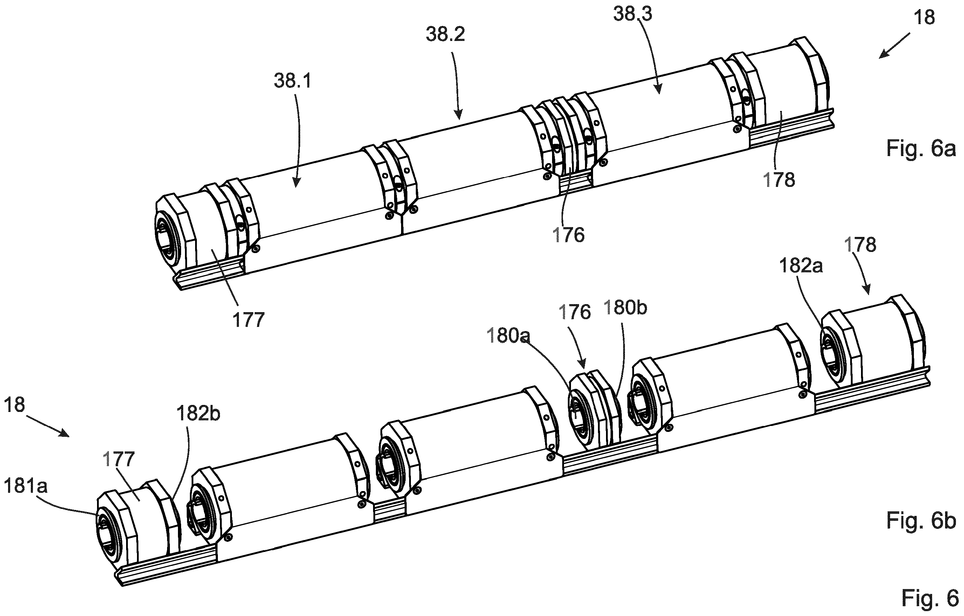

Figuren 6a, 6b zeigen einen Elektromotor, der drei Elektromotor-Module 38.1, 38.2 und 38.3 sowie einen Drehgeber 176, eine Kupplung 177 und eine Bremse 178 umfasst. Der Drehgeber 176 und die Bremse 178 besitzen jeweils eine Welle, die koaxial zu den Rotorwellen der Elektromotor-Module 38.i verlaufen.

Figur 6b zeigt eine Teil-Explosionsansicht des Elektromotors 18 gemäß Figur 6a. Es ist zu erkennen, dass der Drehgeber 176 Drehgeber-Koppelstrukturen 180a, 180b hat, die den Koppelstrukturen 146 der Elektromotor-Module 38 entsprechen.

Die Bremse 178 besitzt zumindest eine Bremsen-Koppelstruktur 182a, die ebenfalls wie die sonstigen Koppelstrukturen aufgebaut ist, sodass die Bremse 178 sowohl mit dem Drehgeber 176 als auch mit jedem Elektromotor-Modul 38 formschlüssig verbindbar ist. Die Kupplung 177 besitzt die gleiche Koppelstruktur wie die Bremse 178, sodass sie wie die Bremse 178 mit jedem Elektromotor-Modul gekoppelt werden kann.

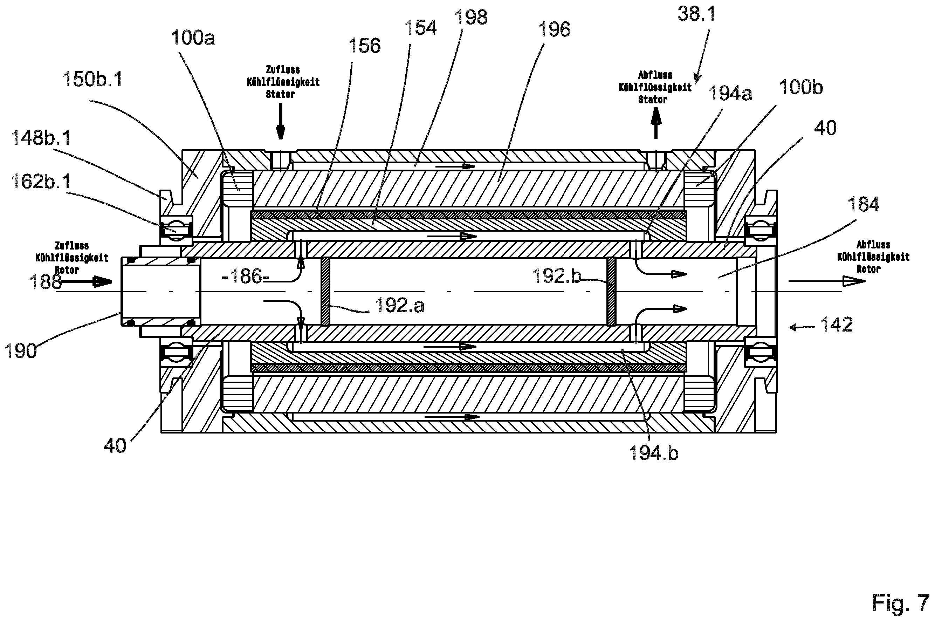

Figur 7 zeigt einen Querschnitt durch das Elektromotor-Modul 38.1 als Innenläuferversion, das zugleich als eigenständiger Elektromotor angesehen werden kann. Es ist zu erkennen, dass in der Rotorwelle 40 ein Kühlkanal 184 angeordnet ist. Ein Kühlfluid 186 in Form einer Kühlflüssigkeit wird in der vorliegenden Form axial durch eine Kühlfluid-Zuführung 188 zugeführt. Eine Dichtbuchse 190 rotiert mit der Rotorwelle und ist über Dichtungen mit der Rotorwelle 40 verbunden.

In der Rotorwelle 40 ist mindestens eine, bevorzugt sind zwei Trennwände 192a, 192b angeordnet, die dazu führen, dass das Kühlfluid 186 durch einen ersten Nebenkanal 194a, einen zweiten Nebenkanal 194b oder einen sonstigen, nicht eingezeichneten Nebenkanal fließt. Die Nebenkanäle 194a, 194b, ... verlaufen sowohl in axialer wie auch in radialer Richtung und damit weitgehend parallel zum Kühlkanal 184. Das Kühlfluid im Nebenkanal 194 kühlt den Magnetträger 154 und damit die Permanentmagnete 156.

Radial außerhalb der Permanentmagnete 156 ist ein Statorblechpaket 196 angeordnet. Das Statorblechpaket 196 wird mittels Kühlfluids in einem Statorkühlkanal 198 gekühlt. Es ist möglich, dass sich der Statorkühlkanal 198 nicht über die volle Breite des Statorblechpakets erstreckt, insbesondere müssen Wicklungsköpfe 100a, 100b nicht auf einer axialen Länge liegen, auf der sich auch der Statorkühlkanal 198 erstreckt.

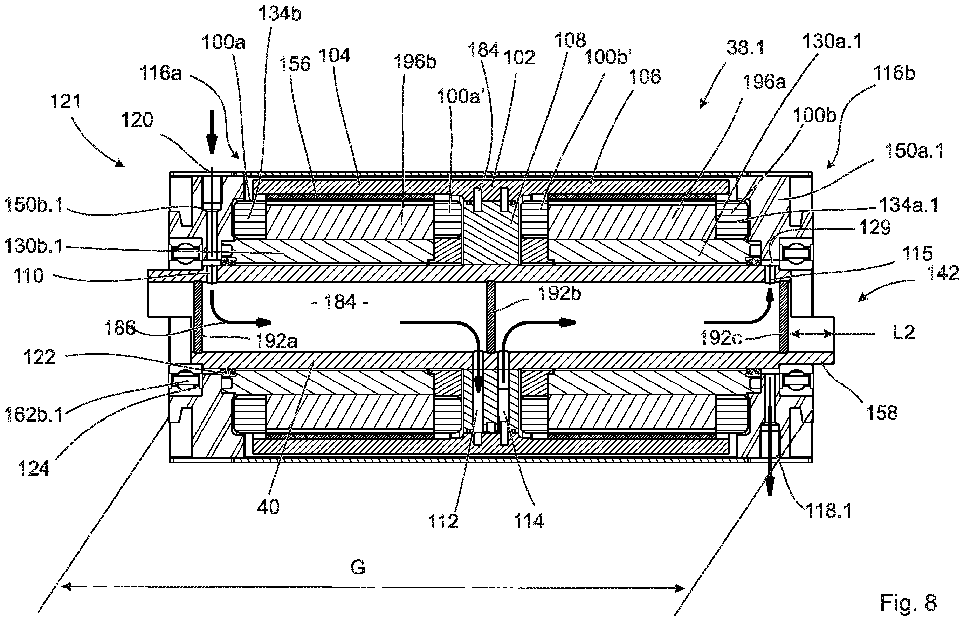

Figur 8 zeigt eine weitere Ausführungsform eines Elektromotor-Moduls 38 in der Außenläuferversion, das gleichzeitig eine eigenständige Ausführungsform eines Elektromotors darstellt. Während es sich bei dem Elektromotor gemäß Figur 7 um einen Innenläufer handelt, handelt es sich bei dem Elektromotor 38 gemäß Figur 8 um einen Außenläufer, bei dem die Permanentmagnete 156 radial außerhalb des Statorblechpakets 196 angeordnet sind. Die Statorblechpakete 196a, 196b greifen in einen Raum zwischen der Rotorwelle 40 und einem rohrförmigen Bauteil 102, das einen ersten Hülsenabschnitt 104 und einen zweiten Hülsenabschnitt 106 aufweist. Das rohrförmige Bauteil 102 ist an einem Steg 108 befestigt, der auch als Rotornabe bezeichnet werden kann. Das rohrförmige Bauteil 102 sowie der Steg 108 bilden ein T-förmiges Rotorelement.

Die Rotorwelle 40 weist einen Zuführ-Stichkanal 110 auf, mittels dem das Kühlfluid 186 in den Kühlkanal 184 geleitet werden kann. Die Trennwände 192a, 192b, 192c führen dazu, dass das Kühlfluid aus dem Stichkanal 110 zunächst einen Teil im Kühlkanal 184 zurücklegt und dann in einen ersten Steg-Kanal 112 fließt, von wo aus es in einen nicht eingezeichneten Kanal im rohrförmigen Bauteil 102 fließen kann. Dort erwärmt sich das Kühlfluid und fließt durch einen zweiten Steg-Kanal 114 im Steg 108 zurück in den Kanal 184. Über einen Abführ-Stichkanal 115 fließt das Kühlfluid aus dem Rotor 142 in einen Wellenringkanal 129 zwischen Statorgehäuse 121 und Rotorwelle 40 und von dort in eine Kühlfluid-Abführung 118.

Das Kühlfluid 186 gelangt über eine Kühlfluid-Zuführung 120 zum Zuführ-Stichkanal 110 die Kühlfluid-Zuführung 120 ist ebenfalls in einem Statorgehäuse 121 ausgebildet, im vorliegenden Fall in der Statorkappe 150b1. Die Kühlfluid-Zuführung 120 umfasst eine erste Wellendichtung 122 und eine zweite Wellendichtung 124. In der vorliegenden Ausführungsform dient die zweite Wellendichtung 124 zudem dazu, das Drehlager 162b.1 abzudichten. Selbstverständlich ist es aber auch möglich, die zweite Wellendichtung an einer anderen Position anzuordnen.

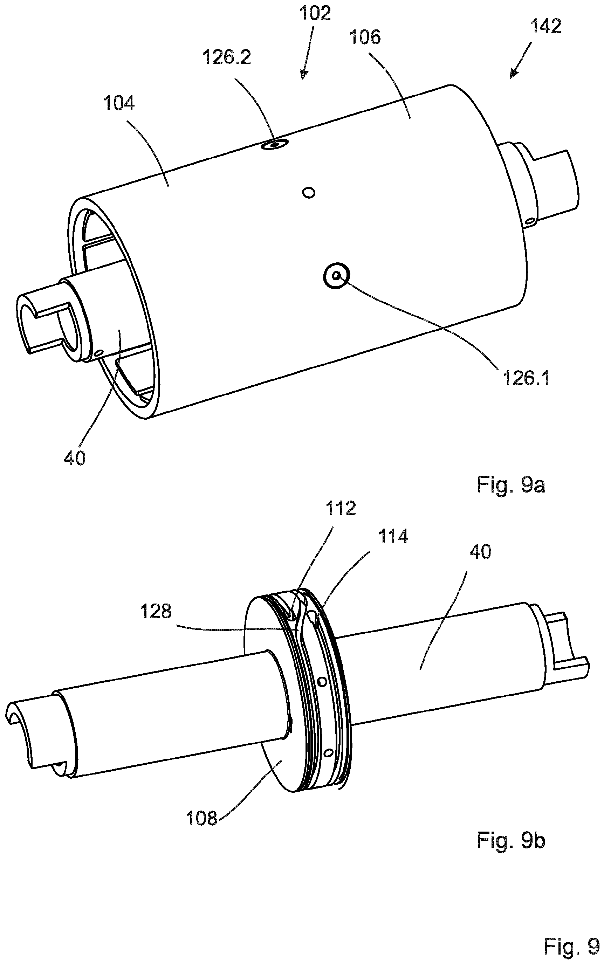

Figur 9a zeigt eine isometrische Ansicht des Rotors 142 des Moduls 38.1. Es ist zu erkennen, dass das rohrförmige Bauteil 102 mittels Schrauben 126.1, 126.2 am Steg 108 (vgl. Figur 9b) befestigt ist.

Figur 9b zeigt die Stegkanäle 112, 114, zwischen denen ein Stegringkanal 128 angeordnet ist. Kühlfluid fließt vom Stegringkanal 128 in das offene Bauteil 102 und von dort zurück, sodass es in den zweiten Steg-Kanal 114 gelangt.

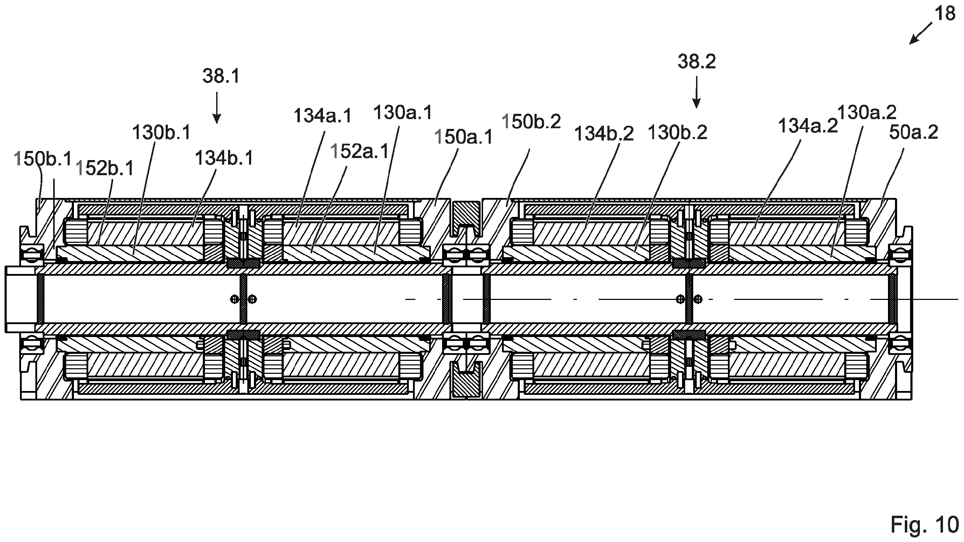

Figur 10 zeigt einen Querschnitt durch einen Elektromotor 18, der aus zwei Elektromotor-Modulen 38.1, 38.2 der Außenläufer-Version aufgebaut ist.

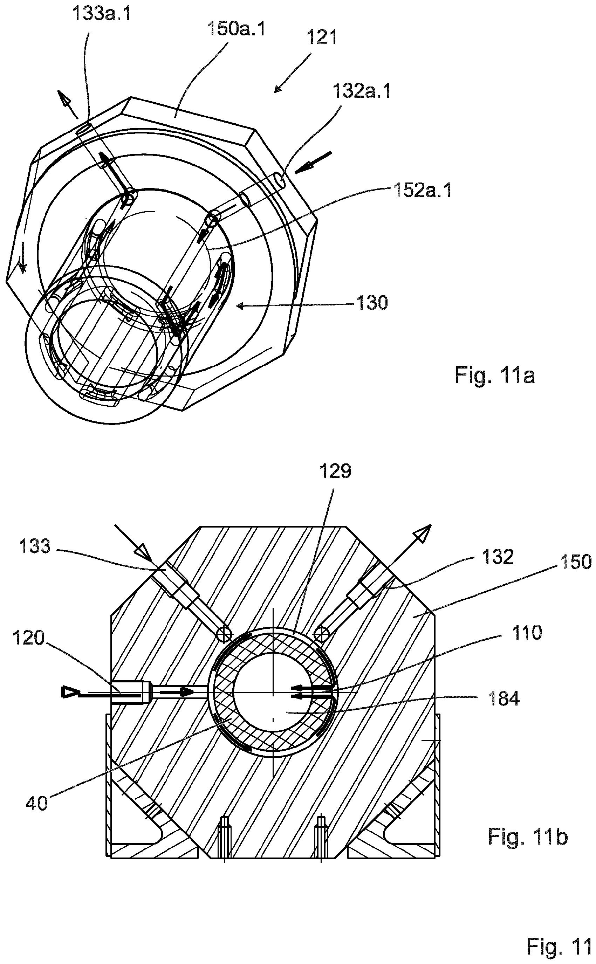

Figur 11a zeigt einen Teil des Statorgehäuses 121, bestehend aus Statorkappe 150 und Statorträger 152, der einen Zufluss 132 für Kühlfluid und einen Abfluss 133 für Kühlfluid aufweist und einen Kühlstützen 130 besitzt.. In Figur 9 sind die Kühlstutzen des Elektromotors 18 ebenfalls eingezeichnet und hier - wie auch bei den sonstigen mehrfach vorhandenen Komponenten - sowohl mit den Zählsuffixen "a" und "b" sowie ".1" und ".2" gekennzeichnet. Diese Zählung soll dazu dienen, mehrfach vorhandene Objekte möglichst einfach als gleichartig zu benennen. Mittels Kühlstutzen 130 werden Stator-Elektromagnete 134 (vgl. Figuren 7 und 9) der Elektromotoren, die Außenläufer sind, gekühlt.

Figur 11b zeigt einen Querschnitt durch die Statorkappe 150 und die Rotorwelle 40 zur Darstellung des Wellenringkanals 129.

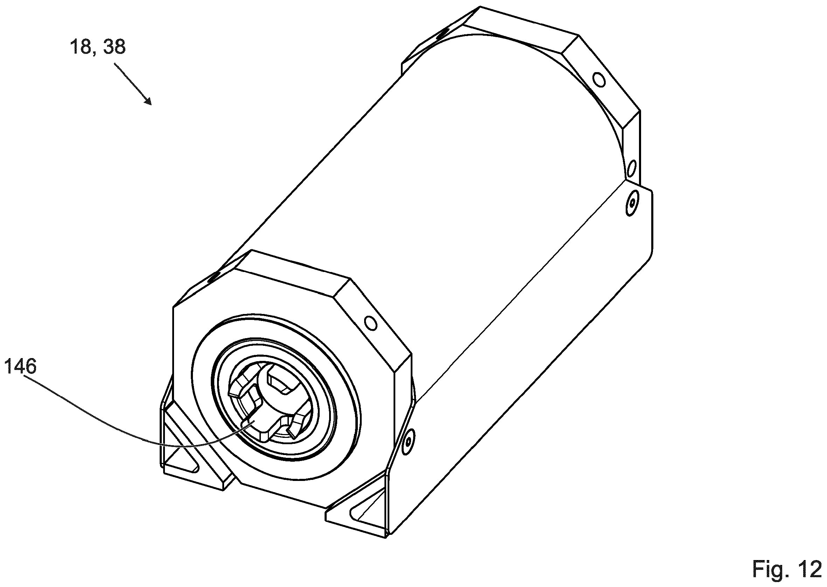

Figur 12 zeigt eine weitere Ausführungsform eines Elektromotor-Moduls 38, bei dem die Wellen-Koppelstruktur 146 mehrzähnig ausgebildet ist.

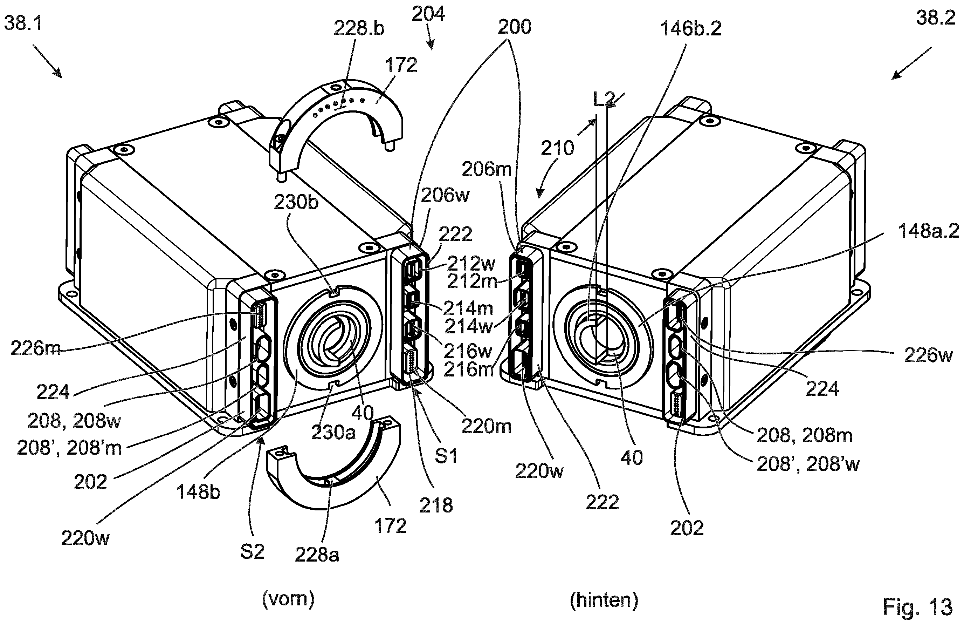

Figur 13 zeigt zwei Elektromotor-Module 38.1, 38.2, wobei das erste Elektromotor-Modul 38.1 einen ersten Axial-Steckverbinder 200 und einen zweiten Axial-Steckverbinder 202 aufweist. Beide Axial-Steckverbinder 200, 202 bilden eine Steckverbindung 204. Der erste Axial-Steckverbinder 200, ist auf einer ersten Seite S1 seitlich neben der Rotorwelle 40 angeordnet. Der zweite Axial-Steckverbinder 202 ist auf einer zweiten Seite S2 angeordnet. Die beiden Seiten S1, S2 sind durch die Rotorwelle 40 voneinander getrennt.

Der erste Axial-Steckverbinder 200 besteht aus einem männlichen Steckverbinder-Element 206m und einem weiblichen Steckverbinder-Element 206w. Die Steckverbindung 204 besitzt einen Kühlmedium-Anschluss 208, der einen männlichen Teil 208m und einen weiblichen Teil 208w aufweist. Der Kühlmedium-Anschluss umfasst eine Hinleitung und eine Rückleitung. Die Hinleitung ist mit dem Bezugszeichen 208 versehen, die Rückleitung mit dem Bezugszeichen 208'.

Die Steckverbindung 204 besitzt zudem einen Strom-Anschluss 210, der die Strom-Steckverbinderelemente 212m, 212w, 214m, 214w und 216m, 216w für den Pluspol, den Minuspol und den Erdleiter umfasst.

Alle Bestandteile des Strom-Anschlusses 210 umfassen Dichtelemente zum fluiddichten Abdichten. Die Dichtelemente sind beispielsweise aus enthropieelastischem Material, insbesondere einem Kunststoff wie beispielsweise Silikon, gefertigt. Die Steckverbindung 204 umfasst einen Daten-Anschluss 218, der ein männliches Daten-Steckverbinderelement 220m und ein weibliches Daten-Steckverbinderelement 220w umfasst. Auch der Daten-Anschluss 218 ist flüssigkeitsdicht ausgebildet.

Um die Dichtigkeit der Steckverbindung zu erhöhen, weist der erste Axial-Steckverbinder 200 einen ersten Sammel-Steckverbinder 222 auf, der in der vorliegenden Ausführungsform den Daten-Anschluss 218 sowie den Strom-Anschluss 210 umgibt. Der zweite Axial-Steckverbinder 202 umfasst einen zweiten Sammelsteckverbinder 224 und einen Signal-Anschluss 226m, 226w.

Figur 13 zeigt zudem, dass die Wellen-Koppelstruktur 146b.2 mit einer axialen Länge L2 zum Teil innerhalb und zum Teil außerhalb der Gehäusebaulänge G (siehe Fig. 8) des Elektromotormoduls 38.2 liegt. Die Länge L2 liegt vorzugsweise zwischen 5 und 30 Millimeter. Bei der Montage von mehreren axial hintereinander liegenden Elektromotormodulen 38.i ist die Länge L2 gleichzeitig der Steckweg für alle Steckverbinder.

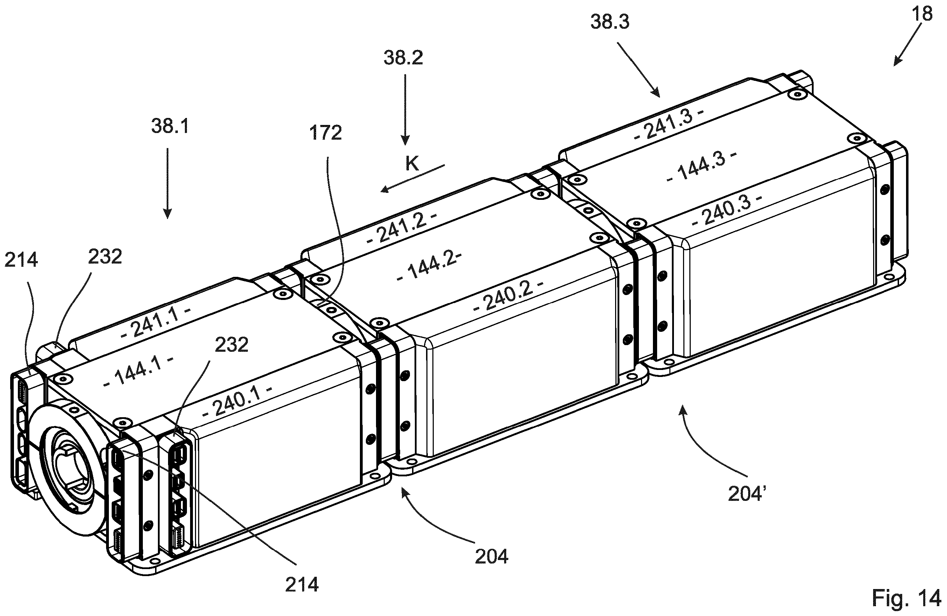

Figur 14 zeigt drei Elektromotor-Module 38.1, 38.2, 38.2, wobei die Elektromotor-Module 38.1, 38.2 mittels der Steckverbindung 204 verbunden sind. Die Elektromotor-Module 38.2, 38.3 sind mittels einer gleich aufgebauten Steckverbindung 204' verbunden. Durch Bewegen zweier Elektromotor-Module 38.1, 38.2 entgegen einer Koppelrichtung K können diese voneinander getrennt werden. Entsprechend werden die Elektromotor-Module 38.1, 38.2 durch Bewegen in Koppelrichtung K miteinander gekoppelt.

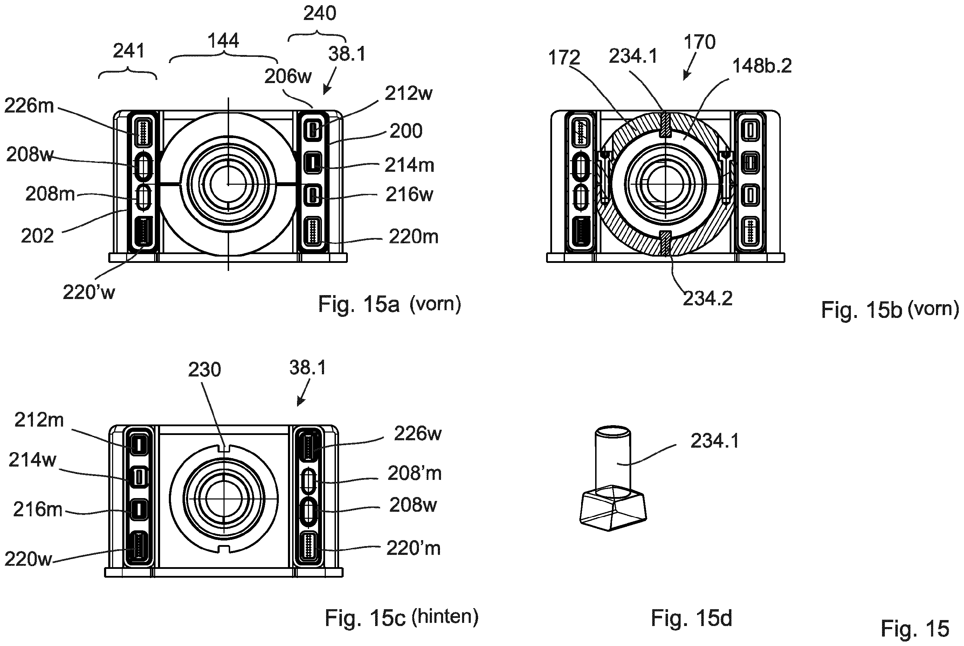

Es ist zu erkennen, dass die Elektromotormodule 38.1, 38.2 mittels der Koppel-Schelle 172 verbunden sind. Figur 13 zeigt, dass die Koppelschelle 172 einen ersten Schellen-Vorsprung 228a und einen zweiten Schellen-Vorsprung 228b besitzt, die in jeweilige Gehäuse-Ausnehmungen 230a, 230b eingreifen. Auf diese Weise sind die beiden Elektromotor-Module 38.1, 38.2 drehfest miteinander verbunden. Alternativ ist es auch möglich, dass die Vorsprünge an der Koppel-Schelle 172 ausgebildet sind und die Ausnehmungen in der Gehäuse-Koppelstruktur 170, im vorliegenden Fall also im Gehäusering 148b.1 und im Gehäusering 148a.2. Eine weitere Möglichkeit ist es, die drehfeste Verbindung wie in Figur 15 gezeigt auszubilden.

Figur 14 zeigt, dass der Elektromotor 18 am Elektromotormodul 38.1 Quer-Steckverbinder 232 aufweist, deren Anschlüsse denen der Steckverbindung 214 entsprechen. Die Anschlüsse sind jeweils miteinander verbunden, sodass durch den Quer-Steckverbinder 232 beispielsweise ein Kühlmedium zu einem Kühlkanal, beispielsweise dem Kühlkanal 184 (vgl. Figur 7), zugeführt werden kann. Das so zugeführte Kühlmedium kann über die Steckverbindung 214 zum zweiten Elektromotor-Modul 38.2 und mittels der Steckverbindung 204' zum Elektromotor-Modul 38.3 geleitet werden.

Figur 15 zeigt in der Teilfigur 15a eine Frontansicht des Elektromotor-Moduls 38.1 mit den beiden Axial-Steckverbindern 200, 202.

Figur 15b zeigt einen Schnitt durch die montierte Koppelschelle 172. Es ist zu erkennen, dass die Gehäuse-Koppelstruktur 170, zu der der Gehäusering 148b.2 gehört, einen ersten Passstift 234.1 und einen zweiten Passstift 234.2 aufweist, die in jeweils eine Gehäuse-Ausnehmung und eine Schellen-Ausnehmung eingreifen und so eine drehfeste Verbindung der Elektromotor-Module garantieren. In Figur 15d ist der Passstift 234.1 in einer isometrischen Ansicht gezeigt. Figur 15c zeigt eine Ansicht des Elektromotor-Moduls 38.1 von der Rückseite ohne die Koppelschelle.

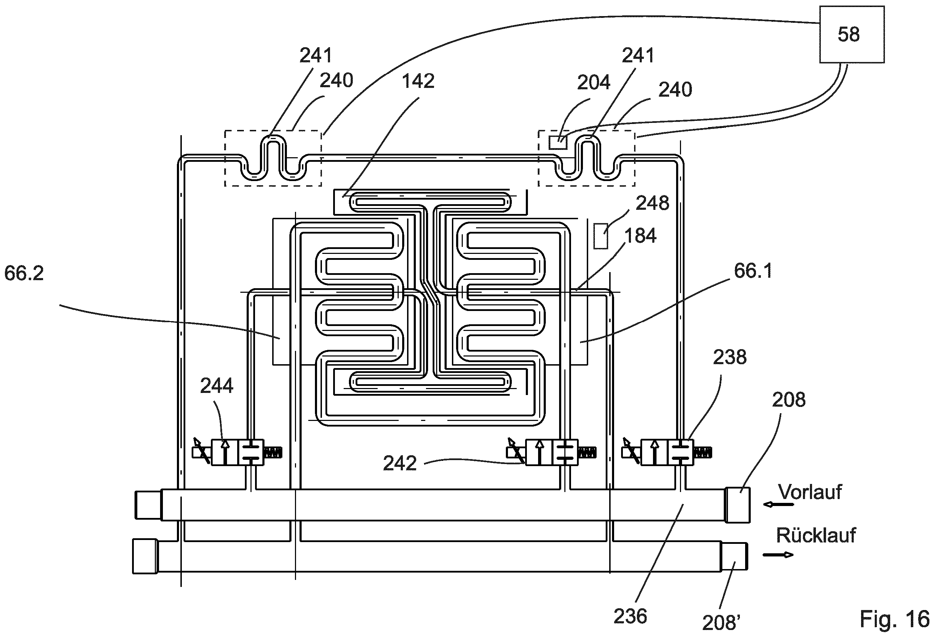

Figur 16 zeigt den Kühlkreislauf des Elektromotor-Moduls 38.1. Der Kühlkanal 184 wird von einem Versorgungskanal 236 mit Kühlmedium, das auch als Kühlfluid bezeichnet werden kann, versorgt. Der Versorgungskanal 236 ist mit den Kühlmedium-Anschlüssen 208, 208' verbunden. Figur 16 zeigt zudem, dass das Elektromotor-Modul 38.1 ein Baugruppen-Ventil 238 aufweist, mit dem der Strom an Kühlfluid zu einer elektronischen Baugruppe 204 verändert werden kann. Die elektronische Baugruppe enthält leistungselektronische Bauteile zum Bestromen der Elektromagnete des Elektromotor-Moduls. Es ist möglich, dass die Elektronik-Baugruppe zwei oder mehr Untergruppen aufweist, wie in Figur 16 durch die gestrichelten Areale angedeutet ist.

In anderen Worten ist die Elektronik-Baugruppe 240 ausgebildet zum Bestromen von Wicklungsköpfen 100a, 100b (vgl. Figur 7). Das Elektromotor-Modul umfasst zudem ein Stator-Ventil 242, mittels dem ein Kühlmediumstrom zum Stator gesteuert oder geregelt werden kann. In der vorliegenden Ausführungsform besitzt das Elektromotor-Modul - was einer bevorzugten Ausführungsform entspricht - zudem ein Rotor-Ventil 244, mittels dem der Strom an Kühlmedium zum Rotor 142 (vgl. Figur 4b) regelbar ist.

Jedes Elektromotor-Modul 38.i hat eine Elektronik-Baugruppe 240, die ausgebildet ist zum Bestromen von Wicklungsköpfen der Statoren 66.1, 66.2, und eine Kühl-Baugruppe 241 zum Kühlen der Elektronik-Baugruppe 240. Die Kühl-Baugruppe 241 kühlt zudem die Statoren 66.1, 66.2 und den Rotors 142. Dazu ist die Kühl-Baugruppe 241 mit dem Kühlmedium-Anschluss 208 verbunden. Die Kühl-Baugruppe 241 liegt der Elektronik-Baugruppe 240 vorzugsweise seitlich gegenüber, jedoch sind auch andere Anordnungen möglich.

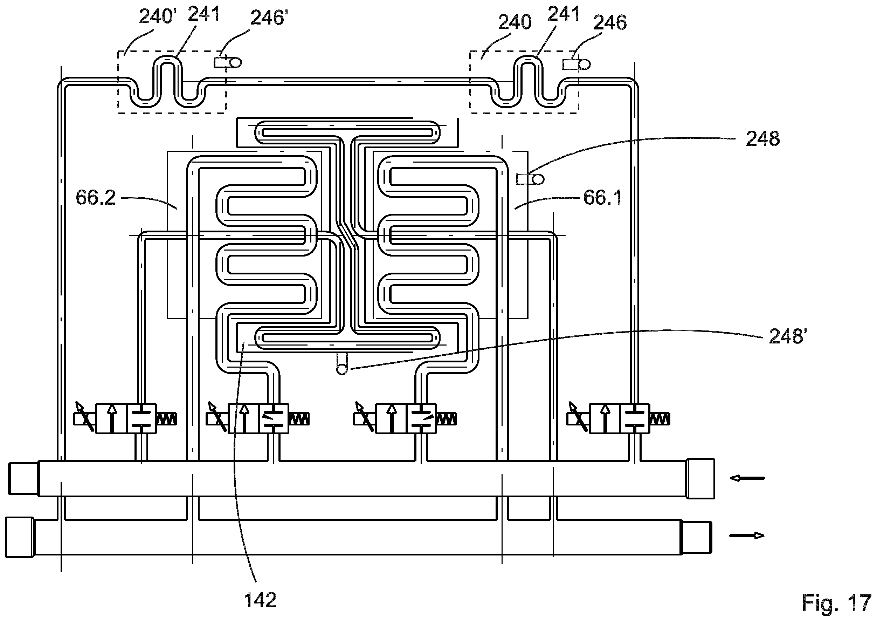

Figur 17 zeigt ein alternatives Kühlschema für ein Elektromotor-Modul eines Elektromotors für ein erfindungsgemäßes Elektrofahrzeug.

Die Signale des in Figur 6 gezeigten Drehgebers 176 werden über eine Datenleitung weitergeleitet, die mit dem Datenanschluss 218 verbunden ist. Der Drehgeber 176 verfügt über die gleiche Steckverbindung 204, sodass der Drehgeber 176 an einer beliebigen Stelle zwischen zwei Elektromotor-Modulen eingebaut werden kann.

Die in Figur 6 gezeigte Bremse 178 wird über Signale angesteuert, die ebenfalls auf der Datenleitung laufen, die mit dem Daten-Anschluss 218 kontaktiert ist.

Figur 17 zeigt schematisch, dass in der Elektronik-Baugruppe 240 zumindest ein Thermometer, im vorliegenden Fall zwei Thermometer 246, 246', angeordnet sein können. Weitere Thermometer 248, 250 können beispielsweise in einem der Wicklungsköpfe oder im Rotor angeordnet sein.

Im vorliegenden Fall sind die Thermometer 246, 246' Elektronik-Thermometer zum Messen der Temperatur T₂₄₀ der Elektronik-Baugruppe 240. Das Thermometer 248 ist ein Stator-Thermometer zum Messen der Temperatur T_{66.1} des Stators 66.1, insbesondere des Wicklungskopfs des Stators 66.1. Der Wicklungskopf könnte auch als Wicklung bezeichnet werden und erzeugt ein Magnetfeld, wenn er von elektrischem Strom durchflossen wird. Das Thermometer 250 ist ein Rotor-Thermometer zum Messen der Temperatur T₁₄₂ des Rotors 142.

Die von den Thermometern gemessenen Temperaturen T₂₄₀, T_{66.1}, T₁₄₂ werden in digitale Signale umgewandelt und ebenfalls mittels der Signalleitung übertragen.

Die Elektronik-Baugruppe 240 ist, wie jede Elektronik-Baugruppe der übrigen Elektromotor-Module, mit der Motorsteuerung 58 verbunden. Die Motorsteuerung 58 erfasst eine Drehmomentanforderung von einem Gaspedal des Elektrofahrzeugs, mittels dem ein Fahrer die Drehmomentabgabe des Motors vorgeben kann. Zudem erfasst die Motorsteuerung 58 eine erste Stator-Temperatur des Stators, insbesondere des Stator-Elektromagnets 134 und/oder eine erste Rotor-Temperatur des Rotors 142, beispielsweise anhand einer Kühlwassertemperatur des Kühlwassers, das den Rotor 142 kühlt.

Die Motorsteuerung 58 steuert die Elektronik-Baugruppen der Elektromotor-Module 38.i so an, dass die Summe aller Drehmomente der Elektromotor-Module 38.i der Drehmomentanforderung entspricht und dass zudem der elektrische Strom in solchen Elektromotor-Module 38.i, in denen die erste Stator-Temperatur einen vorgegebenen Warn-Schwellenwert überschreitet und/oder die Rotor-Temperatur einen vorgegebenen Warn-Schwellenwert, weniger kleiner ist als in Elektromotor-Modulen 38.i, für die das nicht gilt.

Überschreitet die Rotor-Temperatur einen Rotor-Alarmtemperaturschwellenwert und/oder die Stator-Temperatur einen Stator-Alarmtemperaturschwellenwert, so wird das entsprechende Elektromotor-Module 38.i nicht bestromt.

Gemäß einer bevorzugten Ausführungsform steuert die Motorsteuerung 58 die Elektronik-Baugruppen der Elektromotor-Module 38.i so an, dass der elektrische Strom zumindest im Mittelwert umso kleiner ist, je höher die Temperaturen im entsprechenden Elektromotor-Modul 38.i sind.

### Bezugszeichenliste

Die Zählsuffixe "a", "b", .. und ".1", ".2", .. markieren mehrfach vorhandene, gleich aufgebaute Objekte und sind in der Bezugszeichenliste nicht aufgeführt.

| | | | |
|---|---|---|---|
| | | 52 | erstes Koppelgetriebe |
| | | 54 | zweites Koppelgetriebe |
| | | 56 | Elektromotor-Einheit |
| | | 58 | Motorsteuerung |
| | | 60 | Wellenlager |
| | | 62 | Schrauben |
| | | 64 | Perm anentmagnet |
| 10 | Elektrofahrzeug | 66 | Stator |
| 12 | erste Achse | 68 | Basiskörper |
| 14 | zweite Achse | | |
| 16 | Räder | 70 | Kappe |
| 18 | Elektromotor | 72 | Welle |
| | | 74 | Außenverzahnung |
| 20 | Differenzial | 76 | Innenverzahnung |
| 22 | Batterie | 78 | Rotorglocke |
| 24 | Batterie-Einheit | 80 | Mantelabschnitt |
| 26 | Fahrzeugboden | 82 | Spule |
| 28 | Karosserie | | |
| 30 | Fahrersitz | 100 | Wicklungskopf |
| 32 | Beifahrersitz | 102 | rohrförmiges Bauteil |
| 34 | Boden | 104 | erster Hülsenabschnitt |
| 36 | Fahrgastraum | 106 | zweiter Hülsenabschnitt |
| 38 | Elektromotor-Modul | 108 | Steg |
| 39 | Rotor | 110 | Zuführ -Stichkanal |
| 40 | Rotorwelle, durchgehend | 112 | Steg-Kanal |
| 41 | Rotorwelle, gekoppelt | 114 | zweiter Steg-Kanal |
| | | 115 | Abführ-Stichkanal |
| 42 | Getriebe | 116 | Stator |
| 44 | zweites Differential | 118 | Kühlfluid-Abführung |
| 46 | zweites Getriebe | 120 | Kühlfluid-Zuführung |
| 48 | Stator-Spulenpaket | | |
| 50 | Nut | | |
| 121 | Statorgehäuse (besteht aus Statorkappe 150 und Statorträger 152) | 178 | Bremse |
| | | 180 | Drehgeber-Koppelstruktur |
| | | 181 | Kupplung-Koppelstruktur |
| 122 | erste Wellendichtung | | |
| 124 | zweite Wellendichtung | 182 | Bremsen-Koppelstruktur |
| 126 | Schraube | 184 | Kühlkanal |
| 128 | Stegringkanal | 186 | Kühlfluid |
| 129 | Wellenringkanal | 188 | Kühlfluid-Zuführung |
| | | 190 | Dichtbuchse |
| 130 | Kühlstutzen | 192 | Trennwand |
| 132 | Zufluss | 194 | Nebenkanal |
| 133 | Abfluss | 196 | Statorblechpaket |
| 134 | Stator-Elektromagnet | 198 | Statorkühlkanal |
| 142 | Rotor | 200 | erster Axial-Steckverbinder |
| 144 | Modul-Gehäuse | 202 | zweiter Axial-Steckverbinder |
| 146 | Wellen-Koppelstruktur | 204 | Steckverbindung |
| 148 | Gehäusering | 206m, 206w | Steckverbinder-Element |
| 150 | Statorkappe | 208 | Kühlmedium-Anschluss |
| 152 | Statorträger | | |
| 154 | Magnetträger | 210 | Strom-Anschluss |
| 156 | Permanentmagnet | 212 | Strom-Steckverbinderelement |
| 158 | Vorsprung | 216 | Strom-Steckverbinderelement |
| | | 218 | Daten-Anschluss |
| 160 | Lagersitzfläche | | |
| 162 | Drehlager | 220m, 220w | Daten-Steckverbindungselement |
| 164 | Wälzkörper | 222 | Sammelsteckverbinder |
| 166 | Wälzkörper | 224 | zweiter Sammelsteckverbinder |
| 168 | Drehlagerung | 226m, 226w | Signal-Anschluss |
| 170 | Gehäuse-Koppelstruktur | 228a, b | Schellen-Vorsprung |
| 172 | Koppel-Schelle | 230a, b | Gehäuse-Ausnehmung |
| 174 | Innenfläche | 232 | Quer-Steckverbinder |
| 176 | Drehgeber | 234 | Passstift |
| 177 | Schaltkupplung | 236 | Versorgungskanal |
| 238 | Baugruppen-Ventil | N₃₈ | Anzahl der Elektromotor-Module |
| | | N₄₈ | Zahl der Statorpakete |
| 240 | Elektronik-Baugruppe | Q | zentrales Perzentil |
| 241 | Kühl-Baugruppe | Q1, Q2 | Quader |
| 242 | Stator-Ventil | | |
| 244 | Rotor-Ventil | S1 | erste Seite |
| 246 | Baugruppen-Thermometer | S2 | zweite Seite |
| 248 | Stator-Thermometer | S₂₂ | Batterie-Massenschwerpunkt |
| 250 | Rotor-Thermometer | S₁₈ | Elektromotor-Massenschwerpunkt |
| | | S₁₀ | Fahrzeug-Massenschwerpunkt |
| A | Achsabstand | | |
| D | Drehachse | T | Temperatur |
| D₁₈ | Motor-Drehachse | | |
| E | Winkelmessebene | | |
| G | Gehäusebaulänge | | |
| h_{M} | Elektromotor-Bauhöhe | | |
| h_{B} | Batterie-Bauhöhe | | |
| i | Laufindex | | |
| j | Laufindex | | |
| K | Koppelrichtung | | |
| Kᵢ | Kontaktfläche | | |
| L | Längsachse | | |
| L1 | axiale Baulänge Drehlagerung | | |
| L2 | axiale Baulänge der Wellen-Koppelstruktur | | |
| L3 | axiale Baulänge der Gehäuse-Koppelstruktur | | |
| mₗ | Masse der Batterie-Elemente links der Motor-Drehachse | | |
| mᵣ | Masse der Batterie-Elemente rechts der Motor-Drehachse | | |
| Mₘₐₓ | maximales Drehmoment | | |

## Patentansprüche

1. Elektrofahrzeug (10), insbesondere Elektroauto, mit
(a) einer ersten Achse (12),
(b) einer zweiten Achse (14),
(c) einem Elektromotor (18) zum Antreiben von zumindest einer der Achsen und
(d) einer Batterie (22) zum Versorgen des Elektromotors (18) mit elektrischer Energie,
(e) wobei der Elektromotor (18) aus einem ersten Elektromotor-Modul (38.1) und zumindest einem zweiten Elektromotor-Modul (38.2, 38.3) aufgebaut ist,
(f) wobei die Elektromotor-Module (38.1, 38.2, 38.3) bezüglich einer Motor-Drehachse (D₁₈) hintereinander angeordnet sind und
eine gemeinsame Rotorwelle (40) haben oder gekoppelte Rotorwellen (41) besitzen, und
(g) wobei das erste Elektromotor-Modul (38.1) und das zweite Elektromotor-Modul (38.2) mittels einer Steckverbindung (204) miteinander verbunden sind, die
- zumindest einen Kühlmedium-Anschluss (208) für Kühlmedium und
- zumindest einen Strom-Anschluss (210) für Leistungsstrom hat
**dadurch gekennzeichnet, dass**
(h) die Steckverbindung (204)
(i) einen ersten Axial-Steckverbinder (200) und
(ii) einen zweiten Axial-Steckverbinder (202) aufweist und
(iii) der erste Axial-Steckverbinder (200) auf einer ersten Seite (S1) seitlich neben der Rotorwelle (40) angeordnet ist und der zweite Axial-Steckverbinder (202) auf einer zweiten Seite (S2) gegenüber der ersten Seite (S1) seitlich neben der Rotorwelle (40) angeordnet ist.

2. Elektrofahrzeug nach Anspruch 1, **dadurch gekennzeichnet, dass** die Steckverbindung (204) einen Daten-Anschluss (218) für Daten auf einer elektrischen oder optischen Datenleitung aufweist.

3. Elektrofahrzeug nach Anspruch 2, **dadurch gekennzeichnet, dass**
(a) der zumindest eine Kühlmedium-Anschluss (208) im ersten Axial-Steckverbinder (200) angeordnet ist und
(b) der zumindest eine Strom-Anschluss (210) im zweiten Axial-Steckverbinder (202) angeordnet ist.

4. Elektrofahrzeug nach einem der Ansprüche 1 bis 3, **dadurch gekennzeichnet, dass**
(a) der erste Axial-Steckverbinder (200) und der zweite Axial-Steckverbinder (202) durch eine Bewegung der Elektromotor-Module (38.1, 38.2. 38.3) in einer Koppelrichtung (K) aufeinander zu miteinander koppelbar sind, und dass
(b) die Koppelrichtung (K) in axialer Richtung bezüglich der Rotorwelle (40) verläuft.

5. Elektrofahrzeug nach einem der Ansprüche 1 bis 4, **dadurch gekennzeichnet, dass** das erste Elektromotor-Modul (38.1) einen Quer-Steckverbinder (232) hat, der
- einen Quer-Kühlmediumanschluss,
- einen Quer-Datenleitungsanschluss und
- einen Quer-Antriebsstromanschluss hat und
- dessen Koppelrichtung (K) quer zur axialen Richtung verläuft.

6. Elektrofahrzeug nach einem der Ansprüche 1 bis 5, **dadurch gekennzeichnet, dass** der erste Axial-Steckverbinder (200) einen ersten Sammelsteckverbinder (222) aufweist,
wobei der erste Sammelsteckverbinder (222) zumindest zwei Anschlüsse umgibt und mit einem zweiten Sammelsteckverbinder (224) des zweiten Axial-Steckverbinders (202) dichtend verbunden ist.

7. Elektrofahrzeug nach einem der Ansprüche 1 bis 6, **dadurch gekennzeichnet, dass**
(a) der Kühlmedium-Anschluss (208) mit einem Kühlkanal (184) verbunden ist, der durch die Rotorwelle (40) verläuft, und dass
(b) das erste Elektromotor-Modul (38.1) ein gesteuertes, insbesondere geregeltes, Ventil aufweist, mittels dem ein Kühlmediumstrom an Kühlmedium veränderbar ist.

8. Elektrofahrzeug nach einem der Ansprüche 1 bis 6, **dadurch gekennzeichnet, dass** jedes Elektromotor-Modul (38.i)
(a) eine Elektronik-Baugruppe (240) aufweist, die ausgebildet ist zum Bestromen von Wicklungsköpfen, und
(b) eine Kühl-Baugruppe (241) zum Kühlen der Elektronik-Baugruppe (240), zum Kühlen der Statoren (66.1, 66.2) und zum Kühlen des Rotors (142) aufweist und dass
(c) die Kühl-Baugruppe (241) mit dem Kühlmedium-Anschluss (208) verbunden ist.

9. Elektrofahrzeug nach Anspruch 8, **dadurch gekennzeichnet, dass** die Kühl-Baugruppe (241) der Elektronik-Baugruppe (240) seitlich gegenüber liegt,

10. Elektrofahrzeug nach einem der Ansprüche 7 oder 8, **dadurch gekennzeichnet, dass** jedes Elektromotor-Modul (38)
(a) ein gesteuertes, insbesondere geregeltes, Baugruppen-Ventil (238) zum Verändern des Kühlmediumstroms zur Elektronik-Baugruppe (240) und
(b) ein gesteuertes, insbesondere geregeltes, Stator-Ventil (242) zum Verändern des Kühlmediumstroms zum Stator und/oder zum Rotor und/oder
(c) ein gesteuertes, insbesondere geregeltes, Rotor-Ventil (244) zum Verändern des Kühlmediumstroms zum Rotor
aufweist.

11. Elektrofahrzeug (10) nach einem der vorstehenden Ansprüche, **dadurch gekennzeichnet, dass**
(a) das erste Elektromotor-Modul (38.1) ein erstes Modul-Gehäuse (144.1) hat, das eine erste Gehäuse-Koppelstruktur (170.1) aufweist,
(b) das zweite Elektromotor-Modul (38.2) ein zweites Modul-Gehäuse (144.2) hat, das eine zweite Gehäuse-Koppelstruktur (170.2) aufweist,
(c) die Elektromotor-Module (38.1, 38.2) mittels der Gehäuse-Koppelstrukturen (170) formschlüssig miteinander verbunden sind,
(d) eine erste Gehäuse-Koppelstruktur (170.1) zumindest teilweise durch einen ersten konischen Gehäusering (148.1) gebildet ist,
(e) die zweite Gehäuse-Koppelstruktur (170.2) zumindest teilweise durch zweiten konischen Gehäusering (148.2) gebildet ist,
(f) die konischen Gehäuseringe (148) mittels einer Koppel-Schelle (172) verbunden sind, die eine zumindest abschnittsweise konische Innenfläche hat und dass
(g) die Koppel-Schelle (172) zum formschlüssigen drehfesten Verbinden mit der Gehäuse-Koppelstruktur (170) ausgebildet ist.

12. Elektrofahrzeug nach Anspruch 11, **dadurch gekennzeichnet, dass**
(a) die Koppel-Schelle (172) einen Schellen-Vorsprung (228) zum Eingreifen in eine Gehäuse-Ausnehmung (230) der Gehäuse-Koppelstruktur (170) aufweist und/oder
(b) das Gehäuse einen Gehäuse-Vorsprung zum Eingreifen in eine Schellen-Ausnehmung der Schelle aufweist und/oder
(c) der Elektromotor einen Passstift (234) aufweist, der in die Gehäuse-Ausnehmung (230) und die Schellen-Ausnehmung eingreift.

13. Elektrofahrzeug nach einem der vorstehenden Ansprüche, **dadurch gekennzeichnet, dass**
- jedes Elektromotor-Modul (38.i) zumindest ein Stator-Thermometer (248) zum Messen der Temperatur (T_{66.1}) in einem Stator (66.1) und/oder ein Rotor-Thermometer (250) zum Messen der Temperatur (T₁₄₂) in dem zumindest einen Rotor (142) des jeweiligen Elektromotor-Moduls (38.i) aufweist und
- das Elektrofahrzeug (10) eine Motorsteuerung (58) aufweist, die ausgebildet ist zum Ansteuern der Elektromotor-Module (38.i) in Abhängigkeit von zumindest einer der Temperaturen (T_{66.1}, T₁₄₂), die von den Thermometern gemessen werden, sodass ein elektrischer Strom durch zumindest einen Wicklungskopf des Stators begrenzt wird, wenn die zumindest eine Temperatur einen vorgegebenen Warn-Schwellenwert überschreitet, sodass ein weiterer Temperaturanstieg verhinderbar ist.

14. Elektrofahrzeug nach Anspruch 13, **dadurch gekennzeichnet, dass**
- jedes Elektromotor-Modul (38.i) zumindest eine Elektronik-Baugruppe (240) zum Bestromen des zumindest einen Wicklungskopfs aufweist, sodass das Elektromotor-Modul ein Drehmoment abgibt,
- die Motorsteuerung (58) ausgebildet ist zum automatischen Ansteuern der Elektronik-Baugruppen (240), sodass der zumindest eine Wicklungskopf eines Elektromotor-Moduls (38.i), dessen Rotor-Temperatur einen Rotor-Alarmtemperaturschwellenwert überschreitet und/oder dessen Stator-Temperatur einen Stator-Alarmtemperaturschwellenwert überschreitet, weniger bestromt wird als ein Wicklungskopf eines Elektromotor-Moduls (38.i), dessen Rotor-Temperatur den Rotor-Alarmtemperaturschwellenwert nicht überschreitet und dessen Stator-Temperatur einen Stator-Alarmtemperaturschwellenwert nicht überschreitet, insbesondere nicht bestromt wird.

## Claims

1. An electric vehicle (10), especially an electric car with
(a) a first axle (12),
(b) a second axle (14),
(c) an electric motor (18) for driving at least one of the axles, and
(d) a battery (22) for supplying the electric motor (18) with electrical energy,
(e) wherein the electric motor (18) is composed of a first electric motor module (38.1) and at least a second electric motor module (38.2, 38.3),
(f) wherein the electric motor modules (38.1, 38.2, 38.3) are arranged one behind the other in relation to a motor rotational axis (D₁₈), and have a common rotor shaft (40) or coupled rotor shafts (41), and
(g) wherein the first electric motor module (38.1) and the second electric motor module (38.2) are connected to one another via a plug connection (204) which has
- at least one cooling medium connection (208) for cooling medium, and
- at least one power connection (210) for power current,
**characterised in that**
(h) the plug connection (204) comprises
(i) a first axial plug connector (200) and
(ii) a second axial plug connector (202), and
(iii) the first axial plug connector (200) is arranged laterally on a first side (S1) adjacent to the rotor shaft (40) and the second axial plug connector (202) is arranged laterally on a second side (S2) opposite the first side (S1) adjacent to the rotor shaft (40).

2. The electric vehicle according to claim 1, **characterised in that** the plug connection (204) features a data port (218) for data on an electrical or optic data line.

3. The electric vehicle according to claim 2, **characterised in that**
(a) the at least one cooling medium connection (208) is arranged in the first axial plug connector (200) and
(b) the at least one power connection (210) is arranged in the second axial plug connector (202).

4. The electric vehicle according to one of the claims 1 to 3, **characterised in that**
(a) the first axial plug connector (200) and the second axial plug connector (202) can be coupled with one another by way of a movement of the electric motor modules (38.1, 38.2, 38.3) in a coupling direction (K) towards one another, and that
(b) the coupling direction (K) extends in the axial direction in relation to the rotor shaft (40).

5. The electric vehicle according to one of the claims 1 to 4, **characterised in that** the first electric motor module (38.1) has a transverse plug connector (232) which has
- a transverse cooling medium connection,
- a transverse data line port and
- a transverse drive current connection, and
- its coupling direction (K) extends transverse to the axial direction.

6. The electric vehicle according to one of the claims 1 to 5, **characterised in that** the first axial plug connector (200) has a first universal plug connector (222), wherein the first universal plug connector (222) encompasses at least two connections and is connected to a second universal plug connector (224) of the second axial plug connector (202) in a sealing manner.

7. The electric vehicle according to one of the claims 1 to 6, **characterised in that**
(a) the cooling medium connection (208) is connected to a cooling channel (184) that extends through the rotor shaft (40), and that
(b) the first electric motor module (38.1) comprises a controlled, especially feedback controlled, valve, by means of which a cooling medium flow of cooling medium can be changed.

8. The electric vehicle according to one of the claims 1 to 6, **characterised in that** each electric motor module (38.i) comprises
(a) an electronic unit (240) that is designed to supply coil heads with power, and
(b) a cooling unit (241) for cooling the electronic unit (240), cooling the stators (66.1, 66.2) and cooling the rotor (142), and that
(c) the cooling unit (241) is connected to the cooling medium connection (208).

9. The electric vehicle according to claim 8, **characterised in that** the cooling unit (241) is laterally opposite the electronic unit (240),

10. The electric vehicle according to one of the claims 7 or 8, **characterised in that** each electric motor module (38) comprises
(a) a controlled, especially feedback controlled, unit valve (238) for changing the cooling medium flow to the electronic unit (240) and
(b) a controlled, especially feedback controlled, stator valve (242) for changing the cooling medium flow to the stator and/or to the rotor and/or
(c) a controlled, especially feedback controlled, rotor valve (244) for changing the cooling medium flow to the rotor.

11. The electric vehicle (10) according to one of the preceding claims, **characterised in that**
(a) the first electric motor module (38.1) has a first module housing (144.1), comprising a first housing coupling structure (170.1),
(b) the second electric motor module (38.2) has a second module housing (144.2), comprising a second housing coupling structure (170.2),
(c) the electric motor modules (38.1, 38.2) are positively connected to one another via the housing coupling structures (170),
(d) a first housing coupling structure (170.1) is at least partially formed by a first tapered housing ring (148.1),
(e) the second housing coupling structure (170.2) is at least partially formed by a second tapered housing ring (148.2),
(f) the tapered housing rings (148) are connected via a coupling clamp (172), which has an at least partially tapered inner surface, and that
(g) the coupling clamp (172) is designed to connect to the housing coupling structure (170) in a positive-locking and torque-proof manner.

12. The electric vehicle according to claim 11, **characterised in that**
(a) the coupling clamp (172) features a clamp projection (228) for engaging in a housing recess (230) of the housing coupling structure (170) and/or
(b) the housing features a housing projection for engaging in a clamp recess of the clamp and/or
(c) the electric motor comprises a dowel pin (234) that engages in the housing recess (230) and the clamp recess.

13. The electric vehicle according to one of the above claims, **characterised in that**
- each electric motor module (38.i) comprises a stator thermometer (248) for measuring the temperature (T_{66.1}) in a stator (66.1) and/or a rotor thermometer (250) for measuring the temperature (T₁₄₂) in the at least one rotor (142) of the respective electric motor module (38.i), and
- the electric vehicle (10) has a motor control unit (58) that is designed to control the electric motor modules (38.i) depending on at least one of the temperatures (T_{66.1}, T₁₄₂) measured by the thermometers, such that an electric current through at least one coil head of the stator is restricted when the at least one temperature exceeds a pre-determined warning threshold value, thereby enabling the prevention of a further increase in temperature.

14. The electric vehicle according to claim 13, **characterised in that**
- each electric motor module (38.i) features at least one electronic unit (240) for supplying the at least one coil head with power, such that the electric motor module emits a torque,
- the motor control unit (58) is designed to automatically control the electronic units (240), so that the at least one coil head of an electric motor module (38.i), whose rotor temperature exceeds a rotor alarm temperature threshold value and/or whose stator temperature exceeds a stator alarm temperature threshold value,
is supplied with less power then a coil head of an electric motor module (38.i) whose rotor temperature does not exceed the rotor alarm temperature threshold value and whose stator temperature does not exceed a stator alarm temperature threshold value; in particular, it is not supplied with power at all.

## Revendications

1. Véhicule électrique (10), en particulier voiture électrique, comportant
(a) un premier essieu (12),
(b) un second essieu (14),
(c) un moteur électrique (18) pour l'entraînement de l'un au moins des essieux, et
(d) une batterie (22) pour l'alimentation en énergie électrique du moteur électrique (18),
(e) dans lequelle moteur électrique (18) est composé d'un premier module de moteur électrique (38.1) et d'au moins un second module de moteur électrique (38.2, 38.3),
(f) dans lequelles modules de moteur électrique (38.1, 38.2, 38.3) sont disposés l'un derrière l'autre par rapport à un axe de rotation de moteur (D₁₈) et ont un arbre de rotor commun (40) ou possèdent des arbres de rotor couplés (41), et
(g) dans lequelle le premier module de moteur électrique (38.1) et le second module de moteur électrique (38.2) sont reliés l'un à l'autre au moyen d'une connexion d'enfichage (204) qui comprend
- au moins un raccord (208) pour fluide de refroidissement et
- au moins un raccord électrique (210) pour courant de puissance, **caractérisé en ce que**
(h) la connexion d'enfichage (204) présente
(i) un premier connecteur enfichable axial (200); et
(ii) un second connecteur enfichable axial (202); et
(iii) le premier connecteur enfichable axial (200) est disposé sur un premier côté (S1) latéralement à côté de l'arbre de rotor (40), et le second connecteur enfichable axial (202) est disposé sur un second côté (S2) opposé au premier côté (S1) latéralement à côté de l'arbre de rotor (40).

2. Véhicule électrique selon la revendication 1, **caractérisé en ce que** la connexion d'enfichage (204) comprend un raccord de données (218) pour des données sur une ligne de données électrique ou optique.

3. Véhicule électrique selon la revendication 2, **caractérisé en ce que**
(a) ledit au moins un raccord de fluide de refroidissement (208) est disposé dans le premier connecteur enfichable axial (200) ; et
(b) ledit au moins un raccord électrique (210) est disposé dans le second connecteur enfichable axial (202).

4. Véhicule électrique selon l'une des revendications 1 à 3, **caractérisé en ce que**
(a) le premier connecteur enfichable axial (200) et le second connecteur enfichable axial (202) peuvent être couplés l'un à l'autre par un mouvement des modules de moteur électrique (38.1, 38.2. 38.3) l'un vers l'autre dans une direction de couplage (K), et **en ce que**
(b) la direction de couplage (K) s'étend dans une direction axiale par rapport à l'arbre de rotor (40).

5. Véhicule électrique selon l'une des revendications 1 à 4, **caractérisé en ce que**
le premier module de moteur électrique (38.1) possède un connecteur enfichable transversal (232) comprenant
- un raccord transversal de fluide de refroidissement,
- un raccord transversal de ligne de données, et
- un raccord transversal de courant d'entraînement, dont la direction de couplage (K) est transversale à la direction axiale.

6. Véhicule électrique selon l'une des revendications 1 à 5, **caractérisé en ce que**
le premier connecteur enfichable axial (200) comprend un premier connecteur enfichable collectif (222),
le premier connecteur enfichable collectif (222) entourant au moins deux raccords et étant relié de manière étanche à un second connecteur enfichable collectif (224) du second connecteur enfichable axial (202).

7. Véhicule électrique selon l'une des revendications 1 à 6, **caractérisé en ce que**
(a) le raccord de fluide de refroidissement (208) est relié à un canal de refroidissement (184) s'étendant à travers l'arbre de rotor (40), et **en ce que**
(b) le premier module de moteur électrique (38.1) comprend une vanne commandée, en particulier régulée, permettant de faire varier un débit de fluide de refroidissement.

8. Véhicule électrique selon l'une des revendications 1 à 6, **caractérisé en ce que** chaque module de moteur électrique (38.i) comprend
(a) un groupe structurel électronique (240) réalisé pour alimenter en courant électrique des têtes de bobinage, et
(b) un groupe structurel de refroidissement (241) pour refroidir le groupe structurel électronique (240), pour refroidir les stators (66.1, 66.2) et pour refroidir le rotor (142), et **en ce que**
(c) le groupe structurel de refroidissement (241) est relié au raccord de fluide de refroidissement (208).

9. Véhicule électrique selon la revendication 8, **caractérisé en ce que** le groupe structurel de refroidissement (241) est situé latéralement à l'opposé du groupe structurel électronique (240).

10. Véhicule électrique selon l'une des revendications 7 ou 8, **caractérisé en ce que** chaque module de moteur électrique (38) comprend
(a) une vanne de groupe structurel (238) commandée, en particulier régulée, pour faire varier le débit de fluide de refroidissement vers le groupe structurel électronique (240), et
(b) une vanne de stator (242) commandée, en particulier régulée, pour faire varier le débit de fluide de refroidissement vers le stator et/ou vers le rotor, et/ou
(c) une vanne de rotor (244) commandée, en particulier régulée, pour faire varier le débit de fluide de refroidissement vers le rotor.

11. Véhicule électrique (10) selon l'une des revendications précédentes, **caractérisé en ce que**
(a) le premier module de moteur électrique (38.1) comporte un premier boîtier de module (144.1) comprenant une première structure de couplage de boîtier (170.1),
(b) le second module de moteur électrique (38.2) comporte un second boîtier de module (144.2) comprenant une seconde structure de couplage de boîtier (170.2),
(c) les moduVles de moteur électrique (38.1, 38.2) sont reliés l'un à l'autre par coopération de formé au moyen des structures de couplage de boîtier (170),
(d) une première structure de couplage de boîtier (170.1) est au moins partiellement formée par un premier anneau de boîtier conique (148.1),
(e) ladite seconde structure de couplage de boîtier (170.2) est au moins partiellement formée par un second anneau de boîtier conique (148.2),
(f) les anneaux de boîtier coniques (148) sont reliés au moyen d'un collier de couplage (172) ayant une surface intérieure au moins localement conique, et **en ce que**
(g) le collier de couplage (172) est réalisé pour la liaison solidaire en rotation par coopération de forme avec la structure de couplage de boîtier (170).

12. Véhicule électrique selon la revendication 11, **caractérisé en ce que**
(a) le collier de couplage (172) comporte une saillie de collier (228) destinée à s'engager dans un évidement de boîtier (230) de la structure de couplage de boîtier (170) et/ou
(b) le boîtier comporte une saillie de boîtier destinée à s'engager dans un évidement du collier et/ou
(c) le moteur électrique comprend une goupille adaptée (234) qui s'engage dans l'évidement de boîtier (230) et dans l'évidement de collier.

13. Véhicule électrique selon l'une des revendications précédentes, **caractérisé en ce que**
- chaque module de moteur électrique (38.i) comprend au moins un thermomètre de stator (248) pour mesurer la température (T_{66.1}) dans un stator (66.1) et/ou un thermomètre de rotor (250) pour mesurer la température (T₁₄₂) dans ledit au moins un rotor (142) du module de moteur électrique respectif (38.i), et
- le véhicule électrique (10) comprend un dispositif de commande de moteur (58) réalisé pour piloter les modules de moteur électrique (38.i) en fonction de l'une au moins des températures (T_{66.1}, T₁₄₂) mesurées par les thermomètres, de sorte qu'un courant électrique à travers au moins une tête de bobinage du stator est limité lorsque ladite au moins une température dépasse un seuil d'avertissement prédéterminé, de manière à permettre d'empêcher une poursuite de l'augmentation de température.

14. Véhicule électrique selon la revendication 13, **caractérisé en ce que**
- chaque module de moteur électrique (38.i) comprend au moins un groupe structurel électronique (240) pour alimenter en courant électrique ladite au moins une tête de bobinage, de sorte que le module de moteur électrique fournit un couple de rotation,
- le dispositif de commande de moteur (58) est réalisé pour piloter automatiquement les groupes structurels électroniques (240)
- de telle sorte que ladite au moins une tête de bobinage d'un module de moteur électrique (38.i) dont la température de rotor dépasse un seuil de température d'alarme du rotor et/ou dont la température de stator dépasse un seuil de température d'alarme du stator est moins alimentée en courant électrique qu'une tête de bobinage d'un module de moteur électrique (38.i) dont la température de rotor ne dépasse pas le seuil de température d'alarme du rotor et dont la température de stator ne dépasse pas un seuil de température d'alarme du stator, en particulier de telle sorte qu'elle n'est pas alimentée en courant électrique.
